# EUROPEAN PATENT SPECIFICATION

(11) **EP 3 125 591 B1**
(45) Date of publication and mention of the grant of the patent: **22.11.2023**
(21) Application number: 15789710.9
(22) Date of filing: 29.06.2015
(51) Int. Cl.: H04W 28/20, H04M 15/00

(54) **POLICY CONTROL AND PROCESSING METHOD AND DEVICE**
VERFAHREN UND VORRICHTUNG ZUR VERARBEITUNG VON RICHTLINIENKONTROLLEN
PROCÉDÉ ET DISPOSITIF DE COMMANDE ET DE TRAITEMENT DE POLITIQUE

(30) Priority: 09.05.2014 CN 201410196563; 14.10.2014 CN 201410542895
(43) Date of publication of application: 01.02.2017
(73) Proprietor: ZTE Corporation, Shenzhen, Guangdong 518057 (CN)
(72) Inventor: ZHOU, Xiaoyun, Shenzhen Guangdong 518057 (CN); LI, Zhendong, Shenzhen Guangdong 518057 (CN)
(74) Representative: Novagraaf Technologies
(86) International application number: PCT/CN2015/082691
(87) International publication number: WO 2015/169264

(56) References cited:
- CN-A- 101 047 949
- CN-A- 102 195 948
- US-A1- 2009 225 719
- US-A1- 2011 317 557
- US-A1- 2012 182 868
- "3rd Generation Partnership Project; Technical Specification Group Core Network and Terminals; Policy and Charging Control signalling flows and Quality of Service (QoS) parameter mapping (Release 12)", 3GPP STANDARD; 3GPP TS 29.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. V12.3.0, 10 March 2014 (2014-03-10), pages 1-204, XP050769656,
- "3rd Generation Partnership Project; Technical Specification Group Services and System Aspects; Policy and charging control architecture (Release 12)", 3GPP STANDARD; 3GPP TS 23.203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.4.0, 10 March 2014 (2014-03-10), pages 1-218, XP050769616,

## Description

### Technical Field

The present disclosure relates to the field of communication, and in particular to a method and device for processing policy control.

### Background

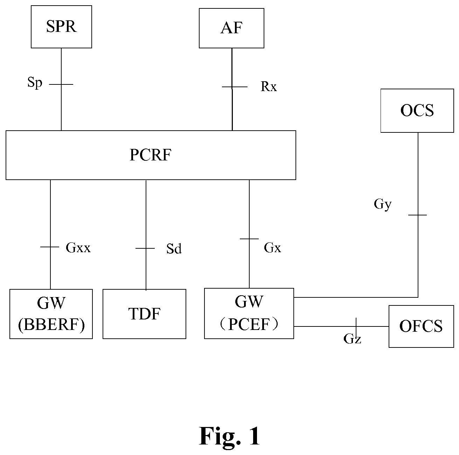

Fig. 1 is a diagram of Policy and Charging Control (PCC) structure defined by the 3rd Generation Partnership Project (3GPP) in a related art, and as shown in Fig. 1, a Policy and Charging Rules Function (PCRF) makes a policy of Quality of Service (QoS) and a charging policy on network resources used for a service. The PCRF is required to combine following information to make a control policy: service information received from an Application Function (AF), user subscription information received from a user Subscription Profile Repository (SPR), and a policy configured by an operator and the like. The PCRF transmits the control policy made for the service to a Policy and Charging Enforcement Function (PCEF) or a Bearer Binding and Event Report Function (BBERF) for enforcement. Meanwhile, the PCRF may subscribe to a related event of a bearer layer from the PCEF and/or the BBERF. In case of occurrence of the related event in the bearer layer, the PCRF is able to timely sense the related event and modify the made control policy. In addition, the PCEF and a Traffic Detection Function (TDF) may enforce an Application Detection and Control (ADC) function according to a PCC rule (PCEF) or ADC rule (TDF) transmitted by the PCRF.

In order to guarantee the QoS of end-to-end service, a 3GPP network provides a bearer-granularity-based QoS guarantee. The same forwarding processing on bearer layer packet is adopted for services mapped to the same bearer. When different forwarding processing on bearer layer packets is required to be provided, it is necessary to map service flows to different Evolved Packet System (EPS) bearers. A bearer usually has an associated Traffic Flow Template (TFT). An UpLink (UL) TFT is a UL packet filter set of the TFT. A DownLink (DL) TFT is a DL packet filter set of the TFT. One bearer in each Public Data Network (PDN) connection is allowed not to have a TFT. For an EPS Internet Protocol Connectivity Access Network (IP-CAN), a default bearer may not have a TFT.

User Equipment (UE) maps a service in a UL direction to one EPS bearer by virtue of a UL TFT. A PCEF (General Packet Radio Service Tunneling Protocol (GTP)-based S5/S8) or a BBERF (Proxy Mobile IP (PMIP)-based S5/S8) maps a service in a DL direction to one EPS bearer by virtue of a DL TFT. For example, the UE map UL data packets to different EPS bearers on the basis of UL TFTs allocated and associated to the bearers. During matching, packet filters in a UL TFT with a lowest priority are firstly compared, and when there are no matched packet filters found, UL data packet filters are sequentially continued to be compared after increasing priorities. When the matched packet filters are found or all the UL packet filters are compared, the process is ended. When the matched packet filters are found, the UL data packets are transmitted by the EPS bearers associated with the TFTs where the matched UL packet filters are located. When there are no matched packet filters found, the UL data packets are transmitted through EPS bearers to which no UL packet filters have been allocated. When all the EPS bearers (including default EPS bearers corresponding to a PDN) have been allocated with one or more UL packet filters, the UE will discard the UL data packets.

A bearer may be unidirectional, and for a DL unidirectional bearer, the DL unidirectional bearer has an associated DL TFT, and in addition, a UL filter is required to deny all UL data to prevent the UL data of UE from being matched to the DL unidirectional bearer.

In the related art, when there is no TFT on a default bearer, it is indicated that any TFT data which is not able to be matched with a specific bearer may be transmitted by a default bearer without a TFT.

A PCC rule or a QoS rule transmitted by a PCRF includes a Service Data Flow (SDF) template, and the SDF template usually includes one or more SDF filters. The PCRF may provide a PCC rule including a wild-carded SDF filter to allow a data packet which is not able to be matched with any other PCC or QoS rule to pass through.

After a PCEF or a BBERF installs or activates a PCC rule or QoS rule provided by a PCRF, the PCEF or the BBERF enforces bearer binding according to a QoS Class Identifier (QCI)/Address Resolution Protocol (ARP) in the rule, and structures a TFT according to an SDF template in the rule, and sends the structured TFT to UE. Although rules with the same QCI/ARP may be bound to the same bearer, the rules with the same QCI/ARP are not always bound to the same bearer. Therefore, the PCRF may not determine the bearer to which the rule is to be bond to when providing the PCC rule/QoS rule, and the PCEF/BBERF finally determines to bind the PCC/QoS rule to a specific bearer.

For a Guaranteed Bit Rate (GBR) bearer, a PCEF/BBERF sets a GBR of the bearer to be a sum of GBRs of all PCC rules or QoS rules bound to the bearer, and sets a Maximum Bit Rate (MBR) of the bearer to be a sum of MBRs of all the PCC rules or QoS rules bound to the bearer. For a non-GBR bearer, when an IP-CAN type supports that the non-GBR bearer has a separated MBR, the MBR of the non-GBR bearer is set to be a sum of MBRs of all PCC rules or QoS rules bound to the bearer. A core network and a wireless side allocate a corresponding resource to a bearer according to a QCI, an ARP, a GBR and an MRB.

Service resource processing in the related art will be described below with reference to the drawings. Descriptions will be made below with a session call service as an example.

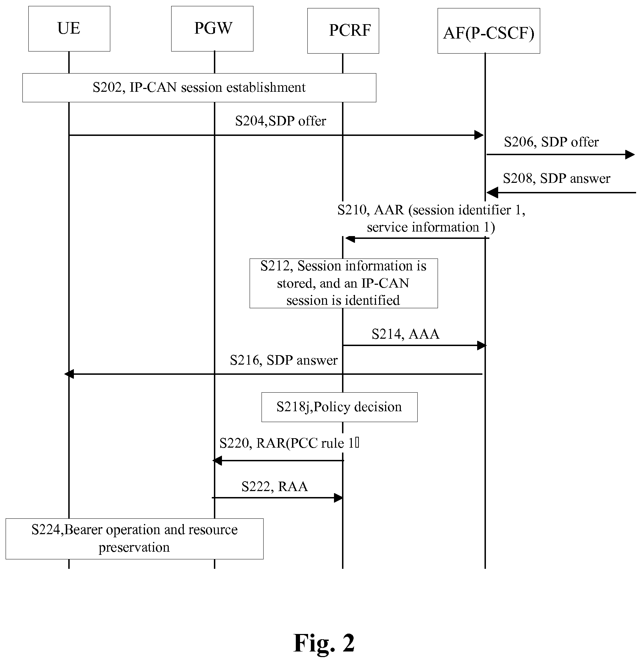

Fig. 2 is a flowchart of providing service information by a Proxy Call Session Control Function (P-CSCF) and PCRF on a calling side in an IP Multimedia Subsystem (IMS) session process in the related art, and as shown in Fig. 2, the flow includes the following steps.

Step 202: UE interacts with a network to establish an IP-CAN session.

Step 204: a P-CSCF receives a Session Description Protocol (SDP) offer in a Session Initiation Protocol (SIP) message, and an SDP parameter defined by the calling UE is contained, and in addition, the message further contains a session identifier (represented as session identifier 1).

Step 206: the P-CSCF forwards the SDP offer to a termination side.

Step 208: the P-CSCF receives a negotiated SDP parameter from the termination side.

Step 210: the P-CSCF acquires related service information from the SDP parameter, such as an IP address, a port number, a media type and a QoS requirement.

The P-CSCF (i.e. an AF of the P-CSCF) sends a Diameter AA-Request (AAR) message to the PCRF, and establishes a new Rx Diameter session (represented as Rx session 1). A session identifier (represented as session identifier 1) of the Diameter session and the service information are contained in the AAR message; and
a format of the AAR message is as follows:

```
   <AA-Request>::=<Diameter Header: 265, REQ, PXY>
                    <Session-Id>//containing Diameter session identifier, which is
                    session identifier 1 here
                    {Auth-Application-Id}
                    {Origin-Host}
                    {Origin-Realm}
                    {Destination-Realm}
                    [Destination-Host]
                    [IP-Domain-Id]
                    [AF-Application-Identifier]
                  *[Media-Component-Description]//containing service information
                    [Service-Info-Status]
                    [AF-Charg ing-Identifier]
                    *[Specific-Action]
                    '[Subscription-Id]
                    *[Supported-Features]
                     [Reservation-Priority]
                     [Framed-IP-Address]
                     [Framed-IPv6-Prefix]
                       [Called-Station-Id]
                     [Service-URN]
                     [Rx-Request-Type]
                     [Origin-State-Id]
                     '[Proxy-Info]
                     *[Route-Record]
                     *[AVP]
```

and a specific format of Media-Component-Description is as follows:

```
   Media-Component-Description::=<AVP Header: 517>
                                  {Media-Component-Number};//media component
                                  number
                                  *[Media-Sub-Component];
                                   [AF-Application-Identifier]
                                   [Media-Type]//media type
                                   [Max-Requested-Bandwidth-UL]// to request a
                                   maximum UL bandwidth
                                   [Max-Requested-Bandwidth-DL]// to request a
                                   maximum DL bandwidth
                                   [M in-Req uested-Bandwidth-U L]
                                   [Min-Requested-Bandwidth-DL]
                                   [Flow-Status]//flow status information
                                   [Reservation-Priority]
                                   [RS-Bandwidth]
                                   [RR-Bandwidth]
                                  *[Codec-Data]
```

and a specific format of Media-Sub-Component is as follows:

```
   Media-Sub-Component::=<AVP Header: 519>
                             {Flow-Number}; IP flow number
                            0*2[Flow-Description]; flow description information,
```

```
                            including IP addresses, 
```

```
port numbers and the like of dual communication parties
```

```
                             [Flow-Status]
                             [Flow-Usage]
                             [Max-Requested-Bandwidth-UL]
                             [Max-Requested-Bandwidth-DL]
                             [AF-Sig nalling-Protocol]
                            *[AVP]
```

For a video phone, there is a video stream and an audio stream, two Media-Component-Description examples are usually contained in the AAR message, one is configured to contain information of the video stream (a value of Media-Type is VIDEO) and the other is configured to contain information of the audio stream (a value of Media-Type is AUDIO). Different Media-Component-Descriptions may be identified by different Media-Component-Numbers. In addition, there is one or more Media-Sub-Component entities contained in each Media-Component-Description example, for example, one is configured to contain a Real Time Protocol (RTP) stream description and the other is configured to contain a Real-time Transport Control Protocol (RTCP) stream description.

Step 212: the PCRF stores the received service information, and enforces session binding.

Step 214: the PCRF returns a Diameter AA-Answer (AAA) message to the P-CSCF (i.e. the AF of the P-CSCF).

Step 216: the P-CSCF forwards the SDP parameter to the UE.

Step 218: the PCRF makes a policy decision to make a PCC rule (represented as PCC rule 1) according to received session information.

The PCRF may determine QoS information and filter template of the authorized PCC rule according to the service information contained by Media-Component-Description. The PCRF may make multiple PCC rules. For a video phone, a video and an audio usually require different QoS, so that the PCRF may make a PCC rule for a video stream and make a PCC rule for an audio stream respectively; and for example, QCI of the PCC rule corresponding to the audio stream is 1 and a GBR and MBR is 23kps (represented as PCC rule 1a), and QCI of the PCC rule corresponding to the video stream is 2 and a GBR and MBR is 700kps (represented as PCC rule 1b). PCC rule 1 represents one or a group of PCC rules made for the IMS session by the PCRF. Under a normal condition, access control of the PCC rule has yet not been enabled at this moment.

A specific format of the PCC rule is as follows, and a PCC rule corresponds to a Charging-Rule-Definition:

```
   Charging-Rule-Definition::=<AVP Header: 1003>
                              {Charging-Rule-Name}//rule name
                              [Service-Identifier]
                              [Rating-Group]
                              *[Flow-Information]//flow description information
                                [Flow-Status]//flow status, which is valued to be
                                DISABLE here
                                [QoS-Information]//QoS information, which further
                                contains a QCI, an ARP, a GBR and an MBR
                                [Reporting-Level]
                                [Online]
                                [Offline]
                                [Metering-Method]
                                [Precedence]
                                [AF-Charging-Identifier]
                              *[Flows]
                                [Monitoring-Key]
                              *[AVP]
```

Step 220: the PCRF sends a Re-Auth-Request (RAR) message to a PCEF, and the message contains PCC rule 1, and during specific implementation, the PCRF contains a Charging-Rule-Install Attribute Value Pair (AVP) in the RAR message and contains one or more Charging-Rule Definition entities in the Charging-Rule-Install AVP.

Step 222: the PCRF returns a Re-Auth-Answer (RAA) message to the P-CSCF.

Step 224: the PCEF installs and enforces PCC rule 1, and enforces bearer binding according to the PCC rule 1. The PCEF judges whether there has existed a bearer with the same QCI/ARP or not according to a QCI/ARP the in PCC rule 1, initiates a bearer establishment flow when a judgment result is that there has not existed the bearer with the same QCI/ARP, otherwise initiates a bearer modification flow. Here, the PCEF decides to create a bearer, and the PCEF sets a GBR of the bearer to be a GBR of PCC rule 1, and sets an MBR of the bearer to be a sum of MBRs of PCC rule 1. In addition, the PCEF generates a TFT of the bearer according to the filter template in PCC rule 1, and sends the TFT to the UE. Since the video phone corresponds to PCC rule 1a and PCC rule 1b, the PCEF initiates two bearers, sets a GBR/MBR of bearer QCI-1 to be 23kps and sets a GBR/MBR of bearer QCI-2 to be 700kps.

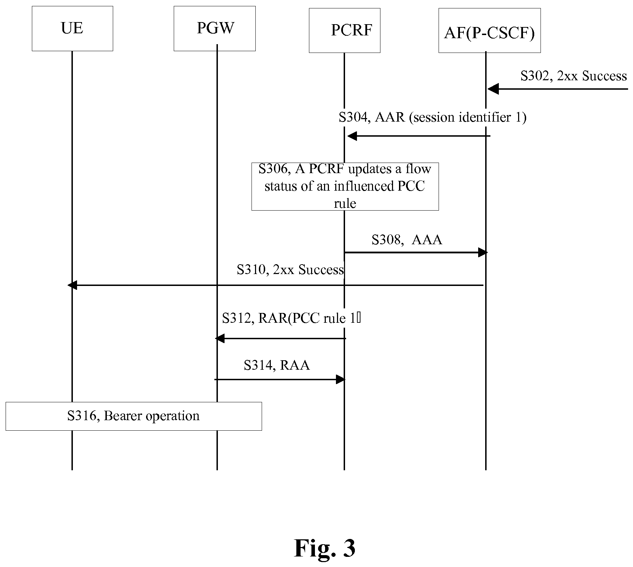

Fig. 3 is a flowchart of making a policy and enabling access control by a PCRF after a flow shown in Fig. 2 in the related art, a resource allocated to authorized service may be adopted for the authorized service after the PCRF makes the policy and enables access control, and as shown in Fig. 3, the flow includes the following steps.

Step 302: a P-CSCF receives a 2xx success message, the message containing session identifier 1.

Step 304: the P-CSCF (i.e. an AP of the P-CSCF) sends a Diameter AAR message to a PCRF to request to enable access control of a service, and a Diameter session identifier in the message is session identifier 1.

Step 306: the PCRF updates flow status information of an influenced PCC rule, and enables access control, that is, the PCRF enables bidirectional access control of PCC rule 1 to enable UE to send data to an opposite end and enable the opposite end to send data to the UE.

Step 308: the PCRF returns an AAA message to the P-CSCF (i.e. the AF of the P-CSCF).

Step 310: the P-CSCF forwards the 2xx success message to the UE.

Step 312: the PCRF sends a Diameter RAR message containing updated PCC rule 1 to a PCEF.

Step 314: the PCEF returns an acknowledgement message to the PCRF.

Step 316: the PCEF updates PCC rule 1, and updates a TFT of a bearer, that is, the PCEF enables access control in the TFT and sends the updated TFT to the UE.

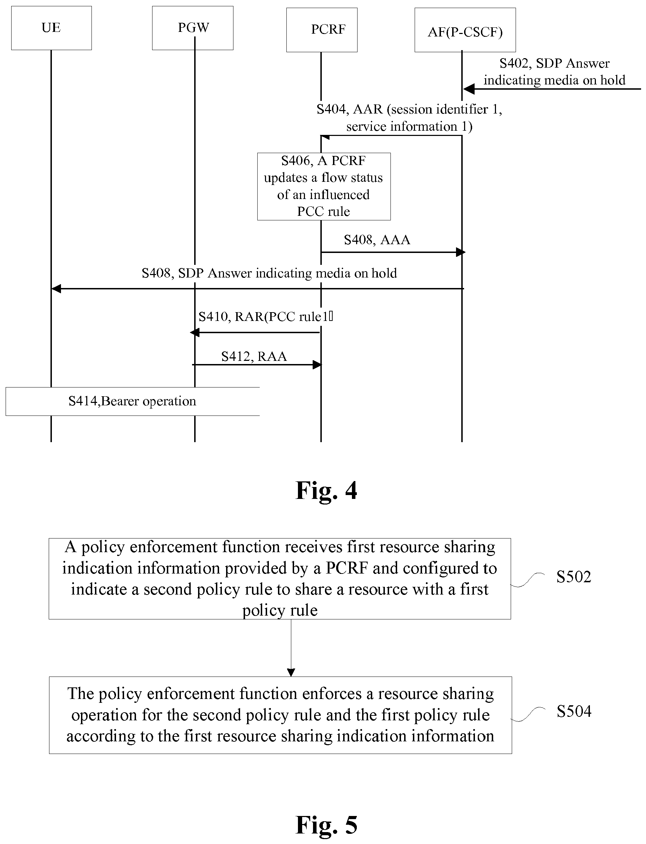

Fig. 4 is a flowchart of disabling access control by a network after UE initiates call hold after flows shown in Fig. 2 and Fig. 3 are executed in the related art, and as shown in Fig. 4, the flow includes the following steps.

Step 402: after UE sends a call hold request message to an opposite end, the opposite end gives a response. A P-CSCF receives an SDP Answer indicating media on hold, i.e. SDP answer putting media on hold in the figure, the message containing session identifier 1.

Step 404: the P-CSCF (i.e. an AF of the P-CSCF) sends a Diameter AAR message to a PCRF, and the message contains updated service information. The updated service information usually indicates that the opposite end is not able to send data to the UE. In addition, the updated service information may further identify that the UE is not able to send data to the opposite end. A Diameter session identifier in the message is session identifier 1.

Step 406: the PCRF updates flow status information of influenced PCC rule 1, and disables access control in a DL direction in PCC rule 1. In addition, the PCRF may further disable access control in a UL direction in PCC rule 1.

Step 408: the PCRF returns a Diameter AAA message to the P-CSCF (i.e. the AF of the P-CSCF).

Step 410: the PCRF sends a Diameter RAR message to a PCEF, and the Diameter RAR message contains updated PCC rule 1.

Step 412: the PCEF returns an acknowledgement message.

Step 414: the PCEF updates PCC rule 1 and updates a TFT of a bearer, that is, the PCEF disables access control in the TFT, and sends the updated TFT to the UE.

In some scenarios, services corresponding to PCC or QoS rules bound to the same bearer may not be used at the same time. For example, after a user initiates a video phone by adopting the flows shown in Fig. 2 and Fig. 3, a network makes a corresponding PCC rule (and QCI-1 corresponds to a 23kps bandwidth and QCI-2 corresponds to a 700-kps bandwidth), and after a PCEF enforces bearer binding, the network allocates a corresponding resource to the video phone. Then, the user holds the video phone by adopting the flow shown in Fig. 4, and initiates another video phone by adopting the flows shown in Fig. 2 and Fig. 3. The network makes a PCC rule for the new video phone (and QCI-1 corresponds to 23kps and QCI-2 corresponds to 700kps), and after the PCEF enforces bearer binding, total resources allocated by the network are as follows: QCI-1 corresponds to 46kps and QCI-2 corresponds to 1,400kps. Actually, the two phones is not able to be made, that is, the two phones may not occupy network resources at the same time, and the total resources allocated by the network are wasted.

Therefore, there exists a resource waste phenomenon in the related art because services corresponding to PCC or QoS rules bound to the same bearer may not be used at the same time. Documents D1 (US 2012/182868 A1), D2(3GPP TS 29.213 V12.3.0), D3(3GPP TS 23.203 V12.4.0) and D4 (US 2009/225719 A1) provide respective technical solutions; however, the above mentioned problem still remains unsolved.

### Summary

The present invention provides a method per claim 1 and device per claim 7 for processing policy control, so as to at least solve the problem that there exists a resource waste phenomenon in the related art because services corresponding to PCC or QoS rules bound to the same bearer may not be used at the same time. Dependent claims provide preferred embodiments of the invention.

### Brief Description of the Drawings

The drawings described here are adopted to provide further understanding of the embodiment of the present disclosure, and form a part of the present disclosure. Schematic embodiments of the present disclosure and descriptions thereof are adopted to explain the present disclosure and not intended to form improper limits to the present disclosure. In the drawings:
Fig. 1 is a diagram of a PCC structure defined by the 3GPP in the related art;
Fig. 2 is a flowchart of providing service information by a P-CSCF and PCRF on a calling side in an IMS session process in the related art;
Fig. 3 is a flowchart of making a policy and enabling access control by a PCRF after a flow shown in Fig. 2 in the related art;
Fig. 4 is a flowchart of disabling access control by a network after UE initiates call hold after flows shown in Fig. 2 and Fig. 3 are executed in the related art;
Fig. 5 is a flowchart of a first method for processing policy control according to an embodiment of the present disclosure;
Fig. 6 is a flowchart of a second method for processing policy control according to an embodiment of the present disclosure;
Fig. 7 is a flowchart of a third method for processing policy control according to an embodiment of the present disclosure;
Fig. 8 is a flowchart of a fourth method for processing policy control according to an embodiment of the present disclosure;
Fig. 9 is a structure block diagram of a first device for processing policy control according to an embodiment of the present disclosure;
Fig. 10 is a first example structure block diagram of an enforcement component 94 in the first device for processing policy control according to an embodiment of the present disclosure;
Fig. 11 is a second example structure block diagram of an enforcement component 94 in the first device for processing policy control according to an embodiment of the present disclosure;
Fig. 12 is a third example structure block diagram of an enforcement component 94 in the first device for processing policy control according to an embodiment of the present disclosure;
Fig. 13 is a fourth example structure block diagram of an enforcement component 94 in the first device for processing policy control according to an embodiment of the present disclosure;
Fig. 14 is a structure block diagram of a second device for processing policy control according to an embodiment of the present disclosure;
Fig. 15 is an example structure block diagram of the second device for processing policy control according to an embodiment of the present disclosure;
Fig. 16 is a structure block diagram of a third device for processing policy control according to an embodiment of the present disclosure;
Fig. 17 is a first example structure block diagram of a making component 164 in the third device for processing policy control according to an embodiment of the present disclosure;
Fig. 18 is a second example structure block diagram of a making component 164 in the third device for processing policy control according to an embodiment of the present disclosure;
Fig. 19 is an example structure block diagram of the third device for processing policy control according to an embodiment of the present disclosure;
Fig. 20 is a structure block diagram of a system for processing policy control according to an embodiment of the present disclosure;
Fig. 21 is a flowchart of initiating a new IMS session and providing service information by a P-CSCF after UE executes flows shown in Fig. 2, Fig. 3 and Fig. 4 in a scenario without a BBERF according to embodiment 1 of the present disclosure;
Fig. 22 is a flowchart of initiating a new IMS session and enabling access control by a P-CSCF in a scenario without a BBERF according to embodiment 1 of the present disclosure;
Fig. 23 is a flowchart of terminating a second IMS session and releasing a related resource after UE executes flows shown in Fig. 21 and Fig. 22 according to embodiment 1 of the present disclosure;
Fig. 24 is a flowchart of initiating a new IMS session and providing service information by a P-CSCF after UE executes flows shown in Fig. 2, Fig. 3 and Fig. 4 in a scenario without a BBERF according to embodiment 2 of the present disclosure;
Fig. 25 is a flowchart of initiating a new IMS session and enabling access control by a P-CSCF in a scenario without a BBERF according to embodiment 2 of the present disclosure;
Fig. 26 is a flowchart of terminating a second IMS session and releasing a related resource after UE executes flows shown in Fig. 24 and Fig. 25 according to embodiment 3 of the present disclosure;
Fig. 27 is a flowchart of initiating a new IMS session and providing service information by a P-CSCF after UE executes flows shown in Fig. 2, Fig. 3 and Fig. 4 in a scenario without a BBERF according to embodiment 3 of the present disclosure;
Fig. 28 is a flowchart of terminating a second IMS session and releasing a related resource after UE executes a flow shown in Fig. 27 and enables access control for communication according to embodiment 3 of the present disclosure;
Fig. 29 is a flowchart of initiating a new IMS session and providing service information by a P-CSCF after UE executes flows shown in Fig. 2, Fig. 3 and Fig. 4 in a scenario without a BBERF according to embodiment 4 of the present disclosure; and
Fig. 30 is a flowchart of terminating a second IMS session and releasing a related resource after UE executes a flow shown in Fig. 29 and enables access control for communication according to embodiment 4 of the present disclosure.

### Detailed Description of the Embodiments

The present disclosure will be described below with reference to the drawings and embodiments in detail. It is important to note that the embodiments in the present disclosure and characteristics in the embodiments may be combined under the condition of no conflicts.

The embodiment provides a method for processing policy control, Fig. 5 is a flowchart of a first method for processing policy control according to an embodiment of the present disclosure, and as shown in Fig. 5, the flow includes the following steps:
Step 502: a policy enforcement function receives first resource sharing indication information provided by a PCRF and configured to indicate a second policy rule to share a resource with a first policy rule, and it is important to note that the policy enforcement function may be of multiple types, for example, when the first policy rule and the second policy rule are PCC rules, the policy enforcement function may be a PCEF, and for another example, when the first policy rule and the second policy rule are QoS rules, the policy enforcement function may be a BBERF; and
Step 504: the policy enforcement function enforces a resource sharing operation for the second policy rule and the first policy rule according to the first resource sharing indication information.

By the steps, the policy enforcement function interacts with the PCRF about the resource sharing indication information configured to indicate resource sharing between the policy rules, and enforces the resource sharing operation according to the resource sharing indication information, so that the problem that there exists a resource waste phenomenon in the related art because services corresponding to PCC or QoS rules bound to the same bearer may not be used at the same time is solved, and the effect of effectively saving resources is further achieved.

When the policy enforcement function enforces the resource sharing operation for the second policy rule and the first policy rule according to the first resource sharing indication information, for ensuring that the shared resource may be really shared, the policy enforcement function may judge whether the second policy rule and the first policy rule are bound to the same bearer or not at first, and after determining that the second policy rule and the first policy rule are bound to the same bearer, the policy enforcement function determines that a GBR value occupied by the second policy rule and the first policy rule is a larger value between a GBR value occupied by the second policy rule and a GBR value occupied by the first policy rule. Moreover, for whether the same bearer to which both the second policy rule and the first policy rule are bound is bound with another policy rule or not, different processing may be adopted for a GBR of the bearer:
after the policy enforcement function determines that the GBR value occupied by the second policy rule and the first policy rule is the larger value between the GBR value occupied by the second policy rule and the GBR value occupied by the first policy rule, the method further includes that: when the bearer is not bound with another policy rule besides the first policy rule and the second policy rule, the policy enforcement function determines according to the first resource sharing indication information that the GBR of the bearer is the larger value between the GBR value occupied by the second policy rule and the GBR value occupied by the first policy rule; and/or, when the bearer is further bound with another policy rule besides the first policy rule and the second policy rule, the policy enforcement function determines according to the first resource sharing indication information that the GBR value of the bearer is a sum of a GBR value occupied by said another policy rule and the larger value between the GBR value occupied by the second policy rule and the GBR value occupied by the first policy rule.

Similarly, for an MBR parameter, after the policy enforcement function determines that the second policy rule and the first policy rule are bound to the same bearer, the policy enforcement function determines that an MBR value occupied by the second policy rule and the first policy rule is a larger value of an MBR value occupied by the second policy rule and an MBR value occupied by the first policy rule. Moreover, for whether the same bearer to which both the second policy rule and the first policy rule are bound is bound with another policy rule or not, different processing may be adopted for an MBR of the bearer:
after the policy enforcement function determines that the MBR value occupied by the second policy rule and the first policy rule is the larger value between the MBR value occupied by the second policy rule and the MBR value occupied by the first policy rule, the method further includes that: when the bearer is not bound with another policy rule besides the first policy rule and the second policy rule, the policy enforcement function determines according to the first resource sharing indication information that the MBR of the bearer is the larger value between the MBR value occupied by the second policy rule and the MBR value occupied by the first policy rule; and/or, when the bearer is further bound with another policy rule besides the first policy rule and the second policy rule, the policy enforcement function determines according to the first resource sharing indication information that the MBR value of the bearer is a sum of an MBR value occupied by said another policy rule and the larger value between the MBR value occupied by the second policy rule and the MBR value occupied by the first policy rule.

It is important to note that there may also be multiple indication manners of the first resource sharing indication information. For example, the first resource sharing indication information may be a policy rule name of the first policy rule, and may also be an identifier contained in the first policy rule, and the identifier is configured to identify that the second policy rule is able to share the resource with the first policy rule. In the embodiment of the present disclosure, the identifier contained in the first policy rule may be provided when the first policy rule is initially provisioned or the first policy rule is modified. In the embodiment of the present disclosure, the first resource sharing indication information may also be contained in multiple manners, and for example, may be contained in the second policy rule, and may also be contained in an installation parameter of the second policy rule.

In addition, it is important to point out that the method for processing policy control may be applied to multiple services, and as long as the PCRF provides a resource sharing indication, policy control may be implemented according to the method for processing policy control. For example, when services corresponding to the first policy rule and the second policy rule are session call services, the first resource sharing indication information is determined by the PCRF according to second resource sharing indication information provided by an AF, and the second resource sharing indication information indicates that a second session call service corresponding to the second policy rule shares a resource with a first session call service corresponding to the first policy rule, and a media type of the first session call service is the same as the media type of the second session call service.

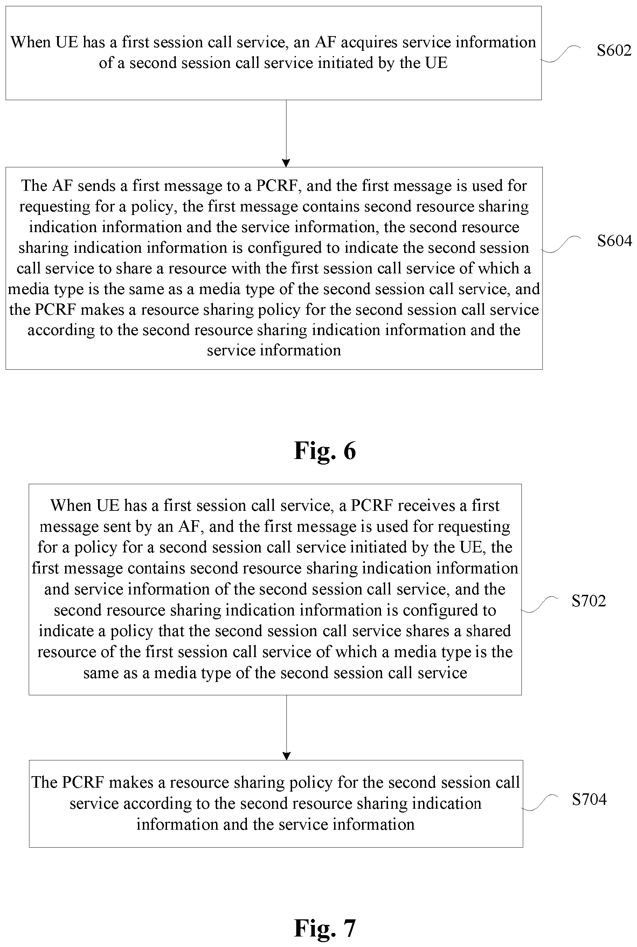

The embodiment also provides a method for processing policy control, Fig. 6 is a flowchart of a second method for processing policy control according to an embodiment of the present disclosure, and as shown in Fig. 6, the flow includes the following steps:
Step 602: when UE has a first session call service, an AF acquires service information of a second session call service initiated by the UE; and
Step 604: the AF sends a first message to a PCRF, and the first message is used for requesting for a policy, the first message contains second resource sharing indication information and the service information, the second resource sharing indication information indicates that the second session call service shares a resource with the first session call service of which a media type is the same as a media type of the second session call service, and the PCRF makes a resource sharing policy for the second session call service according to the second resource sharing indication information and the service information.

By the steps, the AF interacts with the PCRF about the resource sharing indication information configured to indicate resource sharing between policy rules, and the PCRF makes the resource sharing policy according to the resource sharing indication information, so that the problem that there exists a resource waste phenomenon in the related art where corresponding policies are independently made according to each session service respectively, then a policy enforcement function enforces the respectively made policies, however services corresponding to policy rules bound to the same bearer may not be used at the same time when the respectively made policies are bound to the same bearer is solved, and the effect of effectively saving resources is further achieved.

In order to judge whether a second policy rule may share a resource with a first policy rule or not, before the AF sends a first message to the PCRF, and the first message is used for requesting for a policy for the second session call service, the AF may judge the media types of the second session call service corresponding to the second policy rule and the first session call service corresponding to the first policy rule, that is, the AF determines that the second session call service may share the resource with the first session call service when determining that the media type of the second session call service is the same with the media type of the first session call service.

In the embodiment of the present disclosure, when the AF send the first message configured to request for the policy and containing the second resource sharing indication information to the PCRF, multiple manners may be adopted, merely two examples are listed for description below, and of course, the manners are applicable to all obvious transformations or equivalent replacements of the two examples.

For example, two different sessions may be adopted for processing of the two session call services, the AF provides the first session call service for the PCRF by adopting a first Rx session, the AF provides the second session call service for the PCRF by adopting a second Rx session, and the AF contains the second resource sharing indication information in the first message of the second Rx session, and the second resource sharing indication information is a session identifier configured to identify the first Rx session or the second resource sharing indication information is an identifier contained in the first Rx session. In the embodiment of the present disclosure, the identifier contained in the first Rx session may be provided when the first Rx session is established or modified.

For another example, the same session may also be adopted for processing of the two session call services, the AF provides the first session call service for the PCRF by adopting the first Rx session, the AF provides the second session call service for the PCRF by adopting the first Rx session, and the AF contains the second resource sharing indication information in the first message of the first Rx session, and the second resource sharing indication information is an explicit resource sharing indication parameter or an implicit resource sharing indication parameter indicating that the media type of the second session call service is the same as the media type of the first session call service.

In the embodiment of the present disclosure, the AF may send a second message by adopting the first Rx session after receiving a second session call service termination request, the second message contains a media component identifier and flow status described by a media component corresponding to the second session call service, and the flow status is set to be disabled.

The embodiment further provides a method for processing policy control, Fig. 7 is a flowchart of a third method for processing policy control according to an embodiment of the present disclosure, and as shown in Fig. 7, the flow includes the following steps:
Step 702: when UE has a first session call service, a PCRF receives a first message sent by an AF, and the first message is configured to request for a policy for a second session call service initiated by the UE, the first message contains second resource sharing indication information and service information of the second session call service, and the second resource sharing indication information indicates that a policy that the second session call service shares a shared resource of the first session call service of which a media type is the same as a media type of the second session call service; and
Step 704: the PCRF makes a resource sharing policy for the second session call service according to the second resource sharing indication information and the service information.

By the steps, the AF interacts with the PCRF about the resource sharing indication information configured to indicate resource sharing between policy rules, and the PCRF makes the resource sharing policy according to the resource sharing indication information, so that the problem that there exists a resource waste phenomenon in the related art where corresponding policies are independently made according to each session service respectively, then a policy enforcement function enforces the respectively made policies, however services corresponding to policy rules bound to the same bearer may not be used at the same time if the respectively made policies are bound to the same bearer is solved, and the effect of effectively saving resources is further achieved.

In the embodiment of the present disclosure, when the PCRF makes the resource sharing policy for the second session call service according to the second resource sharing indication information and the service information, different processing manners may be adopted according to different resources occupied by a first policy rule and a second policy rule, which will be described below with examples.

For a GBR, the PCRF judges according to the second resource sharing indication information whether a GBR value occupied by the second policy rule of the second session call service is larger than a GBR value occupied by the first policy rule of the first session call service or not; and when a judgment result is that the GBR value occupied by the second policy rule of the second session call service is larger than the GBR value occupied by the first policy rule of the first session call service, the PCRF updates the GBR value occupied by the first policy rule to be 0, and/or, when the judgment result is that the GBR value occupied by the second policy rule of the second session call service is not larger than the GBR value occupied by the first policy rule of the first session call service, the PCRF updates the GBR value of the first policy rule to be a difference between a GBR value occupied by the second policy rule and the GBR value occupied by the first policy rule.

For an MBR, the following processing may be adopted when the PCRF makes the resource sharing policy for the second session call service according to the second resource sharing indication information and the service information: the PCRF judges according to the second resource sharing indication information whether an MBR value occupied by the second policy rule of the second session call service is larger than an MBR value occupied by the first policy rule of the first session call service or not; and when a judgment result is that the MBR value occupied by the second policy rule of the second session call service is larger than the MBR value occupied by the first policy rule of the first session call service, the PCRF updates the MBR value occupied by the first policy rule to be 0, and/or, when the judgment result is that the MBR value occupied by the second policy rule of the second session call service is larger than the MBR value occupied by the first policy rule of the first session call service, the PCRF updates the MBR value of the first policy rule to be a difference between the MBR value occupied by the second policy rule and the MBR value occupied by the first policy rule.

In the embodiment of the present disclosure, in order to ensure that the second session call service corresponding to the second policy rule may share the resource with the first session call service corresponding to the first policy rule, before the PCRF makes the resource sharing policy for the second session call service according to the second resource sharing indication information and the service information, the PCRF may judge according to the service information whether the media type of the second session call service is the same as the media type of the first session call service or not and whether media access control of the first session call service is in an off state or not; and when the media type of the second session call service is the same as the media type of the first session call service and the media access control of the first session call service is in the off state, it is determined that the second session call service is able to share the resource with the first session call service.

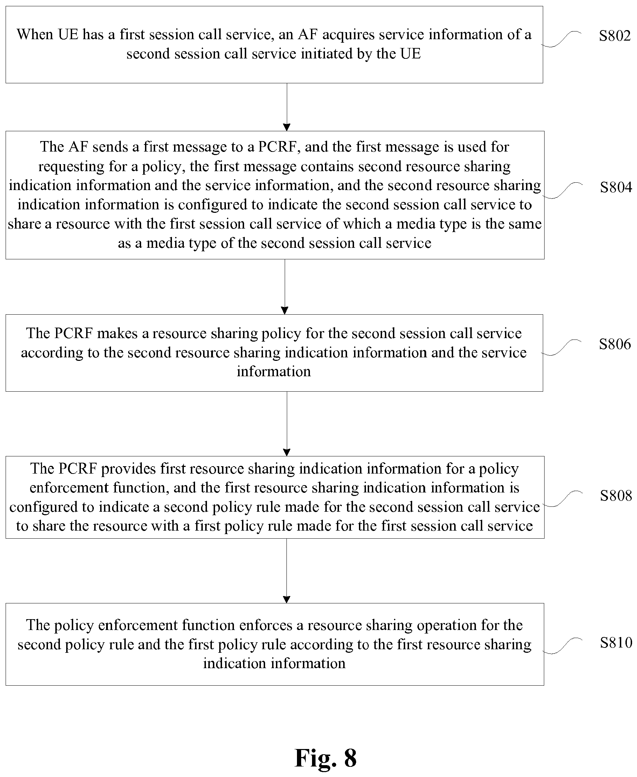

The embodiment further provides a method for processing policy control, Fig. 8 is a flowchart of a fourth method for processing policy control according to an embodiment of the present disclosure, and as shown in Fig. 8, the flow includes the following steps:
Step 802: when UE has a first session call service, an AF acquires service information of a second session call service initiated by the UE;
Step 804: the AF sends a first message to a PCRF, and the first message is used for requesting for a policy, the first message contains second resource sharing indication information and the service information, and the second resource sharing indication information indicates that the second session call service shares a resource with the first session call service of which a media type is the same as a media type of the second session call service;
Step 806: the PCRF makes a resource sharing policy for the second session call service according to the second resource sharing indication information and the service information;
Step 808: the PCRF provides first resource sharing indication information for a policy enforcement function, and the first resource sharing indication information indicates that a second policy rule made for the second session call service shares the resource with a first policy rule made for the first session call service; and
Step 810: the policy enforcement function enforces resource sharing operation for the second policy rule and the first policy rule according to the first resource sharing indication information.

By the steps, for the session call services, the AF, the PCRF and a PCEF interact about the resource sharing indication information, the resource sharing policy is made according to the resource sharing indication information and the made resource sharing policy is enforced, so that the problem that there exists a resource waste phenomenon in the related art where corresponding policies are independently made according to each session service respectively, then a policy enforcement function enforces the respectively made policies, however services corresponding to policy rules bound to the same bearer may not be used at the same time when the respectively made policies are bound to the same bearer is solved, and the effect of effectively saving resources is further achieved.

It is important to note that all of the AF, the PCRF and the PCEF may adopt operation processing manners enforced in the abovementioned embodiments and example embodiments, and preferably, different resource processing manners may be adopted according to different resource parameters when the policy enforcement function enforces the resource sharing operation for the second policy rule and the first policy rule according to the first resource sharing indication information.

The embodiment further provides a device for processing policy control, the device is configured to implement the abovementioned embodiments and example implementation modes, and that what has been described will not be elaborated. For example, term "component", used below, may implement a combination of software and/or hardware with a preset function. Although the device described in the following embodiment is preferably implemented with software, implementation with hardware or a combination of software and hardware is also possible and conceivable.

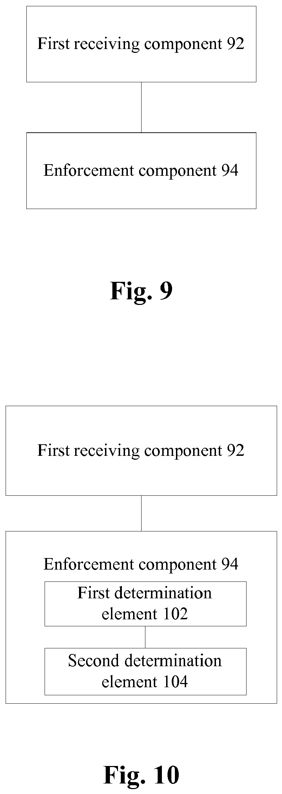

Fig. 9 is a structure block diagram of a first device for processing policy control according to an embodiment of the present disclosure, and as shown in Fig. 9, the device is applied to a policy enforcement function, and includes a first receiving component 92 and an enforcement component 94. The device will be described below.

The first receiving component 92 is configured to receive first resource sharing indication information provided by a PCRF and configured to indicate a second policy rule to share a resource with a first policy rule; and the enforcement component 94 is connected to the first receiving component 92, and is configured to enforce a resource sharing operation for the second policy rule and the first policy rule according to the first resource sharing indication information.

Fig. 10 is a first example structure block diagram of an enforcement component 94 in the first device for processing policy control according to an embodiment of the present disclosure, and as shown in Fig. 10, the enforcement component 94 includes: a first determination element 102 and a second determination element 104. The enforcement component 94 will be described below.

The first determination element 102 is configured to determine that the second policy rule and the first policy rule are bound to a same bearer; and the second determination element 104 is connected to the first determination element 102, and is configured to determine that a GBR value occupied by the second policy rule and the first policy rule is a larger value between a GBR value occupied by the second policy rule and a GBR value occupied by the first policy rule.

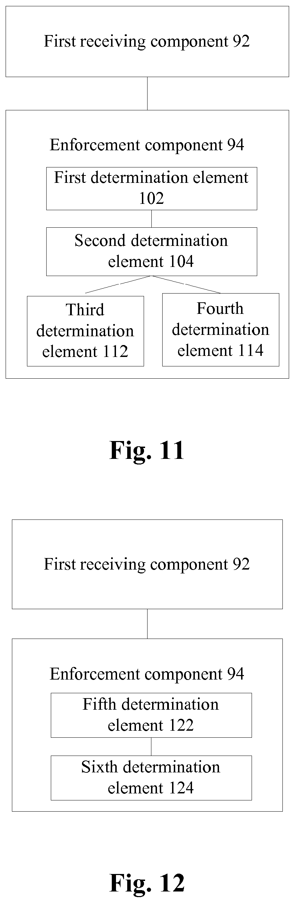

Fig. 11 is a second example structure block diagram of an enforcement component 94 in the first device for processing policy control according to an embodiment of the present disclosure, and as shown in Fig. 11, the enforcement component 94 further includes a third determination element 112 and/or a fourth determination element 114, besides all the structures shown in Fig. 10. The enforcement component 94 will be described below.

The third determination element 112 is connected to the second determination element 104, and is configured to, when the bearer is not bound with another policy rule besides the first policy rule and the second policy rule, determine according to the first resource sharing indication information that a GBR value of the bearer is the larger value between the GBR value occupied by the second policy rule and the GBR value occupied by the first policy rule; and the fourth determination element 114 is connected to the second determination element 104, and is configured to, when the bearer is further bound with another policy rule besides the first policy rule and the second policy rule, determine according to the first resource sharing indication information that the GBR value of the bearer is a sum of a GBR value occupied by said another policy rule and the larger value between the GBR value occupied by the second policy rule and the GBR value occupied by the first policy rule.

Fig. 12 is a third example structure block diagram of an enforcement component 94 in the first device for processing policy control according to an embodiment of the present disclosure, and as shown in Fig. 12, the enforcement component 94 includes a fifth determination element 122 and a sixth determination element 124. The enforcement component 94 will be described below.

The fifth determination element 122 is configured to determine that the second policy rule and the first policy rule are bound to the same bearer; and the sixth determination element 124 is connected to the fifth determination element 122, and is configured to determine that an MBR value occupied by the second policy rule and the first policy rule is a larger value of an MBR value occupied by the second policy rule and an MBR value occupied by the first policy rule.

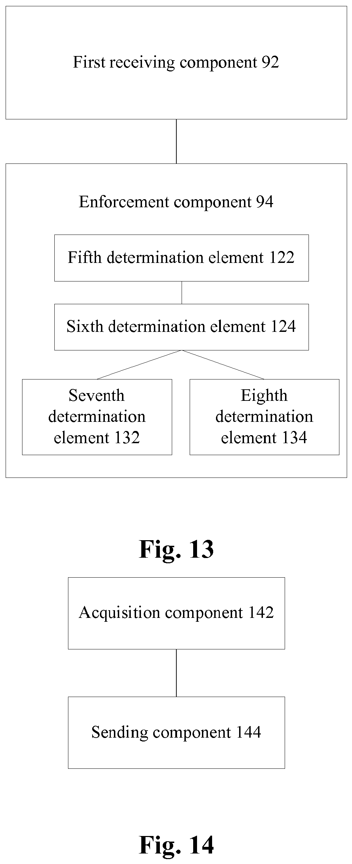

Fig. 13 is a fourth example structure block diagram of an enforcement component 94 in the first device for processing policy control according to an embodiment of the present disclosure, and as shown in Fig. 13, the enforcement component 94 further includes a seventh determination element 132 and/or an eighth determination element 134, besides all the structures shown in Fig. 12. The enforcement component 94 will be described below.

The seventh determination element 132 is connected to the sixth determination element 124, and is configured to, when the bearer is not bound with another policy rule besides the first policy rule and the second policy rule, determine according to the first resource sharing indication information that an MBR of the bearer is the larger value between the MBR value occupied by the second policy rule and the MBR value occupied by the first policy rule; and the eighth determination element 134 is connected to the sixth determination element 124, and is configured to, when the bearer is further bound with another policy rule besides the first policy rule and the second policy rule, determine according to the first resource sharing indication information that the MBR value of the bearer is a sum of an MBR value occupied by said another policy rule and the larger value between the MBR value occupied by the second policy rule and the MBR value occupied by the first policy rule.

Optionally, the policy enforcement function is a PCEF or a BBERF.

Fig. 14 is a structure block diagram of a second device for processing policy control according to an embodiment of the present disclosure, and as shown in Fig. 14, the device is applied to an AF, and includes an acquisition component 142 and a sending component 144. The device will be described below.

The acquisition component 142 is configured to, when UE has a first session call service, acquire service information of a second session call service initiated by the UE; and the sending component 144 is connected to the acquisition component 142, and is configured to send a first message to a PCRF, and the first message is used for requesting for a policy, the first message may contain second resource sharing indication information and the service information, the second resource sharing indication information may be configured to indicate the second session call service to share a resource with the first session call service of which a media type is the same as the media type of the second session call service, and the PCRF may make a resource sharing policy for the second session call service according to the second resource sharing indication information and the service information.

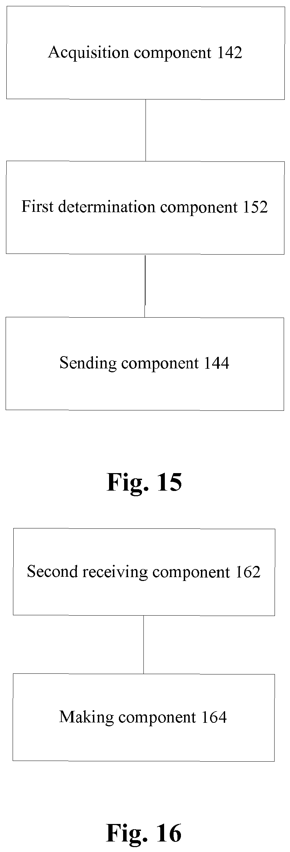

Fig. 15 is an example structure block diagram of a second device for processing policy control according to an embodiment of the present disclosure, and as shown in Fig. 15, the device further includes: a first determination component 152, besides all the components shown in Fig. 14. The first determination component 152 will be described below.

The first determination component 152 is connected to the acquisition component 142 and the sending component 144, and is configured to determine that the media type of the second session call service is the same with the media type of the first session call service.

Optionally, the sending component is further configured to provide the first session call service for the PCRF by adopting a first Rx session, and the AF provides the second session call service for the PCRF by adopting a second Rx session, and the AF contains the second resource sharing indication information in the first message of the second Rx session, and the second resource sharing indication information is a session identifier configured to identify the first Rx session or an identifier contained in the first Rx session. In the embodiment of the present disclosure, the identifier contained in the first policy rule may be provided when the first policy rule is initially provisioned or the first policy rule is modified.

Optionally, the sending component is further configured to provide the first session call service for the PCRF by adopting a first Rx session, and the AF provides the second session call service for the PCRF by adopting the first Rx session, and the AF contains the second resource sharing indication information in the first message of the first Rx session, and the second resource sharing indication information is an explicit resource sharing indication parameter or an implicit resource sharing indication parameter indicating that the media type of the second session call service is the same as the media type of the first session call service.

Optionally, the sending component is further configured to, after receiving a second session call service termination request, send a second message by adopting the first Rx session, and the second message contains a media component identifier and flow status described by a media component corresponding to the second session call service, and the flow status is set to be disabled.

Fig. 16 is a structure block diagram of a third device for processing policy control according to an embodiment of the present disclosure, and as shown in Fig. 16, the device is applied to a PCRF, and includes: a second receiving component 162 and a formulation component 164. The device will be described below.

The second receiving component 162 is configured to, when UE has a first session call service, receive a first message sent by an AF, and the first message is used for requesting for a policy for a second session call service initiated by the UE, the first message contains second resource sharing indication information and service information of the second session call service, and the second resource sharing indication information indicates that a policy that the second session call service shares a shared resource of the first session call service of which a media type is the same as a media type of the second session call service; and
the making component 164 is connected to the second receiving component 162, and is configured to make a resource sharing policy for the second session call service according to the second resource sharing indication information and the service information.

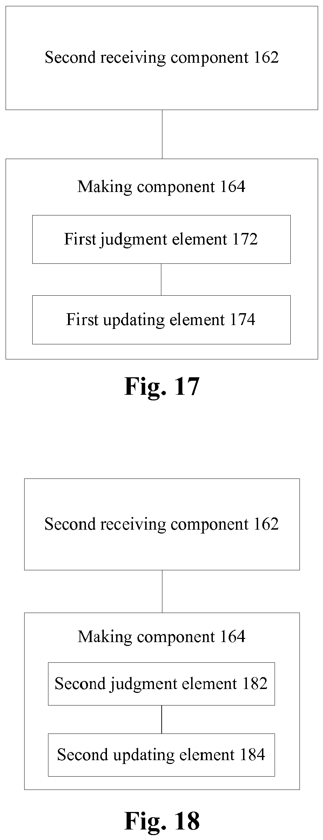

Fig. 17 is a first example structure block diagram of a formulation component 164 in the third device for processing policy control according to an embodiment of the present disclosure, and as shown in Fig. 17, the making component 164 includes a first judgment element 172 and a first updating element 174. The making component 164 will be described below.

The first judgment element 172 is configured to judge according to the second resource sharing indication information whether a GBR value occupied by a second policy rule of the second session call service is larger than a GBR value occupied by a first policy rule of the first session call service or not; and the first updating element 174 is connected to the first judgment element 172, and is configured to, when a judgment result of the first judgment element is that the GBR value occupied by the second policy rule of the second session call service is larger than the GBR value occupied by the first policy rule of the first session call service, update the GBR value occupied by the first policy rule to be 0, and/or, when the judgment result is that the GBR value occupied by the second policy rule of the second session call service is not larger than the GBR value occupied by the first policy rule of the first session call service, update the GBR value of the first policy rule to be a difference between a GBR value occupied by the second policy rule and the GBR value occupied by the first policy rule.

Fig. 18 is a second example structure block diagram of a formulation component 164 in the third device for processing policy control according to an embodiment of the present disclosure, and as shown in Fig. 18, the making component 164 includes a second judgment element 182 and a second updating element 184. The making component 164 will be described below.

The second judgment element 182 is configured to judge according to the second resource sharing indication information whether a Maximum Bit Rate (MBR) value occupied by the second policy rule of the second session call service is larger than an MBR value occupied by the first policy rule of the first session call service or not; and the second updating element 184 is connected to the second judgment element 182, and is configured to, when a judgment result of the second judgment element is that the MBR value occupied by the second policy rule of the second session call service is larger than the MBR value occupied by the first policy rule of the first session call service, update the MBR value occupied by the first policy rule to be 0, and/or, when the judgment result is that the MBR value occupied by the second policy rule of the second session call service is not larger than the MBR value occupied by the first policy rule of the first session call service, update the MBR value of the first policy rule to be a difference between the MBR value occupied by the second policy rule and the MBR value occupied by the first policy rule.

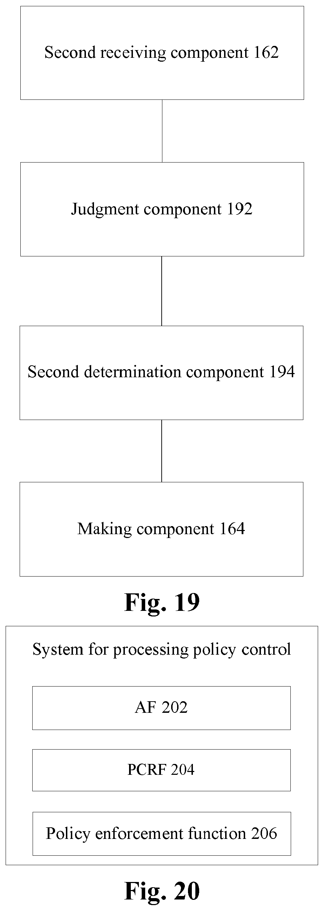

Fig. 19 is an example structure block diagram of the third device for processing policy control according to an embodiment of the present disclosure, and as shown in Fig. 19, the device further includes: a judgment component 192 and a second determination component 194, besides all the structures shown in Fig. 16. The device will be described below.

The judgment component 192 is connected to the second receiving component 162, and is configured to judge according to the service information whether the media type of the second session call service is the same as the media type of the first session call service or not and whether media access control of the first session call service is in an off state or not; and the second determination component 194 is connected to the judgment component 192 and the making component 164, and is configured to, when the media type of the second session call service is the same as the media type of the first session call service and the media access control of the first session call service is in the off state, determine that the second session call service shares the resource with the first session call service.

Fig. 20 is a structure block diagram of a system for processing policy control according to an embodiment of the present disclosure, and as shown in Fig. 20, the system includes: an AF 202, a PCRF 204 and a policy enforcement function 206. The system will be described below.

The AF 202 is configured to, when UE has a first session call service, acquire service information of a second session call service initiated by the UE; the AF 202 is further configured to send a first message to a PCRF, and the first message is used for requesting for a policy, the first message contains second resource sharing indication information and the service information, and the second resource sharing indication information indicates that the second session call service shares a resource with the first session call service of which a media type is the same as a media type of the second session call service; the PCRF 204 is configured to make a resource sharing policy for the second session call service according to the second resource sharing indication information and the service information; the PCRF 204 is further configured to provide first resource sharing indication information for a policy enforcement function, and the first resource sharing indication information indicates that a second policy rule made for the second session call service shares the resource with a first policy rule made for the first session call service; and the policy enforcement function 206 is configured to a enforce resource sharing operation for the second policy rule and the first policy rule according to the first resource sharing indication information.

Optionally, the AF 202, the PCRF 204 and the policy enforcement function 206 may include the abovementioned corresponding devices.

For a resource waste phenomenon caused by the fact that services corresponding to PCC or QoS rules bound to the same bearer may not be used at the same time in the related art, the embodiment provides a policy control solution, and by the solution, resource sharing is implemented, thereby effectively saving network resources. The policy control solution includes that:
an AF provides resource sharing indication information (i.e. the abovementioned second resource sharing indication information) when providing service information, and a PCRF indicates according to the resource sharing indication information a PCEF or a BBERF to enforce sharing operation when set a bandwidth of a bearer during enforcement of bearer binding; or, the AF provides the resource sharing indication information when providing the service information, and the PCRF sets according to the resource sharing indication information a bandwidth of a PCC rule which temporally does not use a resource in PCC rules with a resource sharing requirement to be 0 or a difference between a maximum bandwidth in the PCC rule which temporally does not use the resource and a bandwidth of a PCC rule which currently uses the resource.

In addition, the AF may notify the PCRF by containing a resource sharing indication in a created Rx Diameter session or an established Rx Diameter session. The PCRF may indicate by containing the resource sharing indication in a PCC rule or a QoS rule (i.e. the abovementioned first resource sharing indication information). Two or more than two PCC rules bound to the same bearer may share resources, and a total resource GBR and MBR occupied by these PCC rules are a higher GBR and MBR in these PCC rules. When merely these PCC rules are bound to the bearer, a GBR or MBR of the bearer are respectively set to be a maximum GBR or MBR in these PCC rules; and when there is another PCC rule bound to the bearer, the GBR or MBR of the bearer are respectively set to be a sum of the maximum GBR or MBR in these PCC rules sharing the resources and a GBR or MBR of the other PCC rule.

Preferred implementation modes of the present disclosure will be described below with reference to the drawings, and it is important to note that the following resource sharing indication information between the AF and the PCRF is the second resource sharing indication information in the abovementioned embodiments and example implementation modes, and the resource sharing indication information between the PCRF and the policy enforcement function is the first resource sharing indication information in the abovementioned embodiments and example implementation modes.

### Embodiment 1

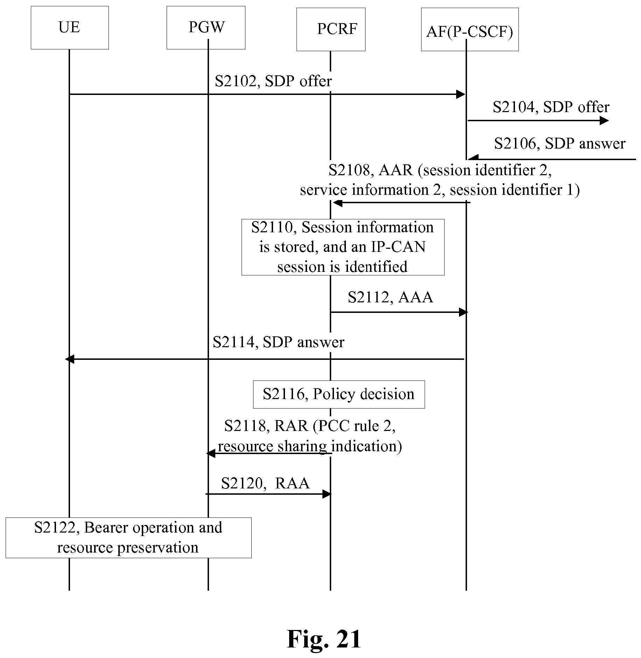

Fig. 21 is a flowchart of initiating a new IMS session and providing service information by a P-CSCF after UE executes flows shown in Fig. 2, Fig. 3 and Fig. 4 in a scenario without a BBERF according to embodiment 1 of the present disclosure. In the flow, the P-CSCF provides the service information for a PCRF by adopting a created Rx Diameter session, and as shown in Fig. 21, the flow includes the following steps.

Step 2102: the P-CSCF receives an SDP offer in a SIP message, and an SDP parameter defined by the calling UE is contained, and the message further contains a new session identifier (session identifier 2) to indicate that the UE initiates a new session.

Step 2104: the P-CSCF forwards the SDP offer to a termination side.

Step 2106: the P-CSCF receives a negotiated SDP parameter from the termination side.

Step 2108: the P-CSCF acquires related service information from the SDP parameter, such as an IP address, a port number, a media type and a QoS requirement. The P-CSCF (i.e. an AF of the P-CSCF) sends a Diameter AAR message to the PCRF, and establishes a new Rx Diameter session (represented as Rx session 2). A session identifier (represented as session identifier 2) of the Diameter session and the service information are contained in the AAR message. In addition, the AAR message further contains session identifier 1 indicating that the service information contained in Rx session 2 may share a resource for service information with the same media type in Rx session 1. For a video phone, Media-Component-Description of which Media-Type is VIDEO in Rx session 2 may share a resource of Media-Component-Description of which Media-Type is VIDEO in Rx session 1; and Media-Component-Description of which Media-Type is AUDIO in Rx session 2 may share a resource of Media-Component-Description of which Media-Type is AUDIO in Rx session 1. At this moment, access control is disabled.

An extended format of the AAR message is as follows:

```
   <AA-Request>::=<Diameter Header: 265, REQ, PXY>
                   <Session-Id>//containing Diameter session identifier, which is
                   session identifier 2 here
                        [Share-Resource-Session-Id]// session identifier with
```

```
                        resource sharing requirement,
```

```
 which is valued to be session identifier 1 here
                  {Auth-Application-Id}
```

```
                  {Origin-Host}
                  {Origin-Realm}
                  {Destination-Realm}
                   [Destination-Host]
                   [IP-Domain-Id]
                   [AF-Application-Identifier]
                 *[Media-Component-Description]//containing service information
                   [Service-Info-Status]
                   [AF-Charging-Identifier]
                  *[Specific-Action]
                  '[Subscription-Id]
                  *[Supported-Features]
                    [Reservation-Priority]
                    [Framed-IP-Address]
                    [Framed-IPv6-Prefix]
                      [Called-Station-Id]
                    [Service-URN]
                    [Rx-Request-Type]
                    [Origin-State-ld]
                  '[Proxy-Info]
                  *[Route-Record]
                  *[AVP]
```

Step 2110: the PCRF stores the received service information, and enforces session binding.

Step 2112: the PCRF returns a Diameter AAA message to the P-CSCF (i.e. the AF of the P-CSCF).

Step 2114: the P-CSCF forwards the SDP parameter to the UE.

Step 2116: the PCRF makes a policy decision to make a PCC rule (represented as PCC rule 2) according to the received service information. The PCRF judges according to Share-Resource-Session-Id in the AAR message whether the two sessions share a resource, and determines that PCC rule 2 and PCC rule 1 may share the resource. The PCRF sets values of a QCI and ARP in PCC rule 2 to be consistent with values of a QCI and ARP in PCC rule 1 (since the two pieces of service information provided by the P-CSCF have the same Media-Type, PCC rule 1 and PCC rule 2 made by the PCRF for the same UE usually have the same QCI/ARP). For a video phone, the PCRF makes a new PCC rule for a video stream and an audio stream respectively, a QCI/ARP of the PCC rule (PCC rule 2a) corresponding to the audio stream is consistent with the QCI/ARP of PCC rule 1a, and a QCI/ARP of the PCC rule (PCC rule 2b) corresponding to the video stream is consistent with the QCI/ARP of PCC rule 1b. A bandwidth of PCC rule 2a (QCI-1) is 23kps, and a bandwidth of PCC rule 2b (QCI-2) is700kps. At this moment, access control of PCC rule 2 is also disabled.

Step 2118: the PCRF sends an RAR message to a PCEF, and the message contains PCC rule 2 and a resource sharing PCC rule name (which is a rule name of PCC rule 1 here). It is indicated that resources of the two PCC rules are shared when PCC rule 2 and PCC rule 1 are bound to the same bearer, that is, a GBR occupied by the two rules adopts a larger value of the values of GBRs in the two rules and an MBR adopts a larger value of the values of MBRs in the two rules. During specific implementation, the format of the PCC rule is extended as follows:

```
   Charging-Rule-Definition::=<AVP Header: 1003>
                              {Charging-Rule-Name}//rule name
                              [Service-Identifier]
                              [Rating-Group]
                              *[Flow-Information]//flow description information
                              [Flow-Status]//flow status, which is valued to be
                              DISABLE here
                              [QoS-Information]//QoS information, further
                              containing a QCI, an ARP, a GBR and an MBR
 [Share-Resource-Rule-Name] sharing PCC rule name
                    [Reporting-Level]
                    [Online]
                    [Offline]
                    [Metering-Method]
                    [Precedence]
                    [AF-Charging-Identifier]
                    *[Flows]
                    [Monitoring-Key]
                    *[AVP]
```

Step 2120: the PCRF returns an RAA message to the P-CSCF.

Step 2122: the PCEF installs and enforces PCC rule 2, and enforces bearer binding according to PCC rule 2. The PCEF according to the QCI/APR in PCC rule 2 binds PCC rule 2 to a bearer to which PCC rule 1 is bound, and respectively sets a GBR and MBR of the bearer to be a larger value of values of the GBR and MBR in the two rules according to the resource sharing indication and the sharing PCC rule name. For a video phone, the PCEF binds PCC rule 2a to a bearer to which PCC rule 1a is bound, sets a GBR and MBR of the bearer to still be 23kps, binds PCC rule 2b to a bearer to which PCC rule 1b is bound, and sets a GBR and MBR of the bearer to still be 700kps.

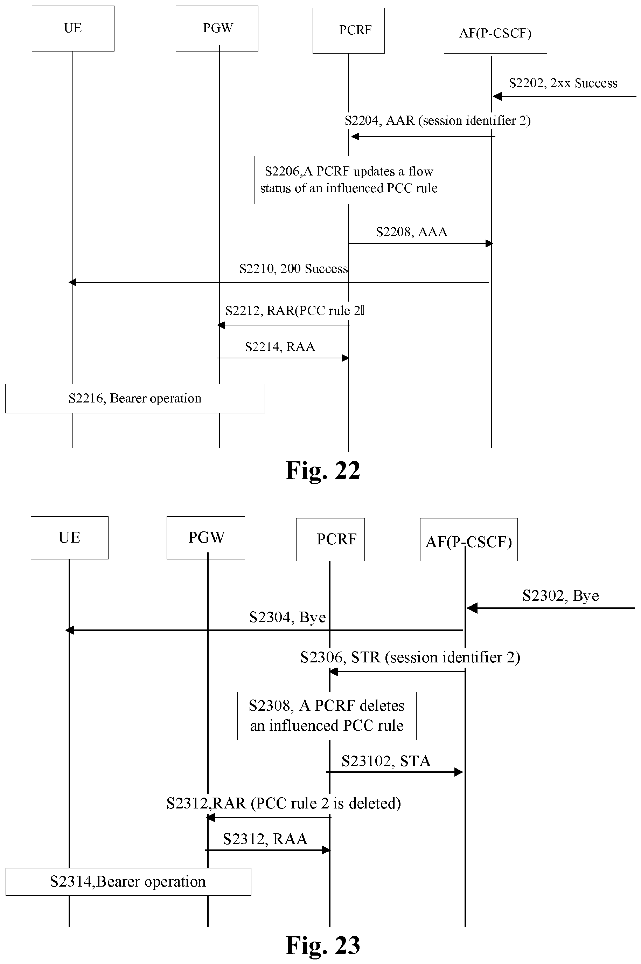

Fig. 22 is a flowchart of initiating a new IMS session and enabling access control by a P-CSCF in a scenario without a BBERF according to embodiment 1 of the present disclosure, and as shown in Fig. 22, the flow includes the following steps.

Step 2202: the P-CSCF receives a 2xx success message, and the message contains session identifier 2.

Step 2204: the P-CSCF sends a Diameter AAR message to the PCRF to request to enable access control of the service, and a Diameter session identifier in the message is session identifier 2.

Step 2206: the PCRF updates flow status information of the influenced PCC rule, and enables access control, that is, the PCRF enables bidirectional access control of PCC rule 2 to enable the UE to send data to an opposite end and enable the opposite end to send data to the UE.

Step 2208: the PCRF returns an AAA message to the P-CSCF.

Step 2210: the P-CSCF forwards the 2xx success message to the UE.

Step 2212: the PCRF sends a Diameter RAR message containing updated PCC rule 2 to a PCEF.

Step 2214: the PCEF returns an acknowledgement message to the PCRF.

Step 2216: the PCEF updates PCC rule 2, and updates a TFT of a bearer, that is, the PCEF enables access control in the TFT and sends the updated TFT to the UE.

Then, the UE may normally execute a second IMS service, and the first IMS service is in a call hold state.

Fig. 23 is a flowchart of terminating a second IMS session and releasing related resources after UE executes flows shown in Fig. 21 and Fig. 22 according to embodiment 1 of the present disclosure, and as shown in Fig. 23, the flow includes the following steps.

Step 2302: the P-CSCF receives a Bye message, and terminates an IMS session, and the message contains session identifier 2.

Step 2304: the P-CSCF forwards the Bye message to UE.

Step 2306: the P-CSCF (i.e. the AF of the P-CSCF) sends a Session Termination Request (STR) message to the PCRF, and the message contains session identifier 2.

Step 2308: the PCRF deletes the influenced PCC rule, i.e. PCC rule 2.

Step 2310: the PCRF returns a Session Termination Answer (STA) message to the P-CSCF (i.e. the AF of the P-CSCF).

Step 2312: the PCRF sends an RAR message to the PCEF to request to delete PCC rule 2.

Step 2314: the PCEF deletes PCC rule 2, that is, the PCEF deletes a filter of PCC rule 2 from a TFT of a bearer to which PCC rule 2 is bound, and respectively sets a GBR or MBR of the bearer to be a GBR or MBR in PCC rule 1. For a video phone, the PCEF deletes a filter of PCC rule 2a from a TFT of a bound bearer, sets a GBR and MBR of the bearer to still be 23kps, deletes a filter of PCC rule 2b from a TFT of a bound bearer, and sets a GBR and MBR of the bound bearer to still be 700kps. The PCEF notifies UE of the above operation.

Embodiment 1 merely describes the flow of initiating another IMS session after a user holds an IMS session. A flow of initiating another IMS session after the user holds multiple IMS sessions is similar. Similarly, two or more than two PCC rules bound to the same bearer may share resources, and a total resource GBR and MBR occupied by these PCC rules are a largest GBR and MBR in these PCC rules. When merely these PCC rules are bound to the bearer, a GBR or MBR of the bearer is respectively set to be a maximum GBR or MBR in these PCC rules; and when there is another PCC rule bound to the bearer, the GBR or MBR of the bearer is respectively set to be a sum of the maximum GBR or MBR in these PCC rules sharing the resources and a GBR or MBR of the other PCC rule.

In embodiment 1, the P-CSCF contains an Rx Diameter session identifier of a resource sharing session in an Rx session of a new session to associate the two sessions, and other methods may also be adopted for implementation in other embodiments. For example, one unique shared session identifier is allocated when an Rx session of a first session is established (that is, the unique shared session identifier (i.e. the identifier in the first Rx session) is contained in Step 210 in Fig. 2)), and then the shared session identifier is contained when an Rx session corresponding to any corresponding resource sharing session is subsequently established, or, a unique shared session identifier is allocated when the Rx session of the first session is modified (that is, the unique shared session identifier is contained in Step 404 in Fig. 4), and then the shared session identifier is contained when an Rx session corresponding to any resource sharing session is subsequently established. In addition, a configuration manner may also be adopted for implementation. For example, when a media type of service information received by the PCRF is consistent with a media type of service information which is received before and access control of a media of the service information which is received before is in an off state, the PCRF determines that a media of the newly received service information may share a resource with the media of the service information which is received before. Similarly, in the embodiment, the PCRF contains a PCC rule name of a newly defined PCC rule with a resource sharing requirement to indicate that two PCC rules share a resource, and other methods may be adopted for implementation in the other embodiments. For example, a unique resource sharing identifier (i.e. the identifier in the first policy rule) is allocated for the first PCC rule, and the unique resource sharing identifier may be provisioned when the first PCC rule is initially provisioned (namely, contained in the PCC rule transmitted in Step 220 in Fig. 2), or is provisioned when the first PCC rule is modified (namely, contained in the PCC rule provisioned in Step 312 in Fig. 3, or contained in the PCC rule provisioned in Step 410 in Fig. 4), and then the resource sharing identifier is contained in all subsequent PCC rules with the resource sharing requirement. In addition, the sharing PCC rule name may also not be contained in the PCC rule, and instead, the rule name of PCC rule 1 is contained in Charging-Rule-Install AVP of PCC rule 2 to identify resource sharing of PCC rule 1 and PCC rule 2.

In embodiment 1, for a video phone, the PCRF makes a PCC rule for a video stream and an audio stream respectively. For a video phone in call hold, access control of the PCC rules for both the video stream and the audio stream is in an off state. In other embodiments, a PCC rule may be made for an RTP stream and RTCP stream in the video stream and the audio stream respectively. For the video phone in call hold, merely the RTP stream is in the off state, and the RTCP stream is in an on state. Under such a condition, PCC rules corresponding to RTP streams, bound to the same bearer, corresponding to two IMS sessions may share resources, while RTCP streams may not share resources. Therefore, the PCRF adds Share-Resource-Rule-Name (which is valued to be a PCC rule name corresponding to the RTP stream of the first IMS session) in the PCC rule corresponding to the RTP stream of the second IMS session.

### Embodiment 2

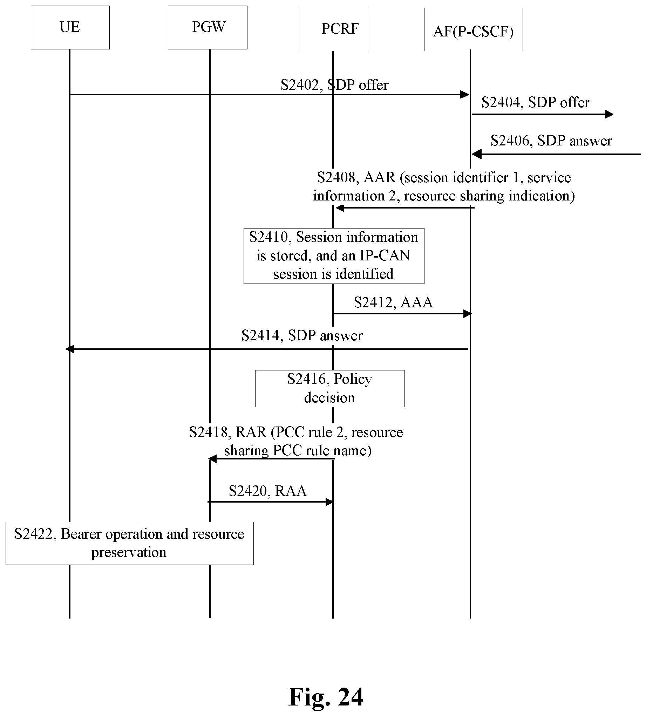

Fig. 24 is a flowchart of initiating a new IMS session and providing service information by a P-CSCF after UE executes flows shown in Fig. 2, Fig. 3 and Fig. 4 in a scenario without a BBERF according to embodiment 2 of the present disclosure, and in the flow, the P-CSCF provides the service information for a PCRF by adopting an established Rx Diameter session. As shown in Fig. 24, the flow includes the following steps.

Step 2402: the P-CSCF receives an SDP offer in a SIP message, and an SDP parameter defined by the calling UE is contained, and the message further contains a new session identifier (session identifier 2) to indicate that the UE initiates a new session.

Step 2404: the P-CSCF forwards the SDP offer to a termination side.

Step 2406: the P-CSCF receives a negotiated SDP parameter from the termination side.

Step 2408: the P-CSCF acquires related service information from the SDP parameter, such as an IP address, a port number, a media type and a QoS requirement. The P-CSCF (i.e. an AF of the P-CSCF) sends a Diameter AAR message to the PCRF, and modifies the established Rx Diameter session. Session identifier 1, the service information and a resource sharing indication are contained in the AAR message. It is indicated that the service information in the AAR message may share a resource with service information with the same media type provided before. For a video phone, newly provided Media-Component-Description of which Media-Type is VIDEO may share a resource of Media-Component-Description, of which Media-Type is VIDEO, provided before; and newly provided Media-Component-Description of which Media-Type is AUDIO may share a resource of Media-Component-Description, of which Media-Type is AUDIO, provided before. A value of Media-Component-Number of the newly provided Media-Component-Description should be different from the value of Media-Component-Number of the Media-Component-Description provided before. At this moment, access control is disabled.

An extended format of the AAR message is as follows:

```
   <AA-Request>::=<Diameter Header: 265, REQ, PXY>
                    <Session-Id>//containing Diameter session identifier, which is
                    session identifier 1 here
                         [Share-Resource-Indication]// resource sharing indication
                    {Auth-Application-Id}
                    {Origin-Host}
                    {Origin-Realm}
                    {Destination-Realm}
                    [Destination-Host]
                    [IP-Domain-Id]
                    [AF-Application-Identifier]
                  *[Media-Component-Description]//containing service information
                    [Service-Info-Status]
                    [AF-Charging-Identifier]
                  *[Specific-Action]
                  '[Subscription-Id]
                  *[Supported-Features]
                    [Reservation-Priority]
                    [Framed-IP-Address]
                    [Framed-IPv6-Prefix]
                       [Called-Station-Id]
                    [Service-URN]
                    [Rx-Request-Type]
                    [Origin-State-ld]
                  '[Proxy-Info]
                  *[Route-Record]
                  *[AVP]
```

Step 2410: the PCRF stores the received service information, and enforces session binding.

Step 2412: the PCRF returns a Diameter AAA message to the P-CSCF (i.e. the AF of the P-CSCF).

Step 2414: the P-CSCF forwards the SDP parameter to the UE.

Step 2416: the PCRF makes a policy decision to make a PCC rule (represented as PCC rule 2) according to the received service information. The PCRF judges whether the service information shares a resource according to Share-Resource-Indication in the AAR message (that is, the newly provided service information may share a resource of service information with the same Media Type provided before), and determines that PCC rule 2 and PCC rule 1 may share the resource. The PCRF sets values of a QCI and ARP in PCC rule 2 to be consistent with the QCI and ARP in PCC rule 1 (since the two pieces of service information provided by the P-CSCF have the same Media-Type, PCC rule 1 and PCC rule 2 made by the PCRF for the same UE usually have the same QCI/ARP). For a video phone, the PCRF makes a new PCC rule for a video stream and an audio stream respectively, a QCI/ARP of the PCC rule (PCC rule 2a) corresponding to the audio stream is consistent with QCI/ARP PCC rule 1a, and a QCI/ARP of the PCC rule (PCC rule 2b) corresponding to the video stream is consistent with QCI/ARP of PCC rule 1b. A bandwidth of PCC rule 2a (QCI-1) is 23kps, and a bandwidth of PCC rule 2b (QCI-2) is700kps. At this moment, access control of PCC rule 2 is also disabled.

Step 2418: the PCRF sends an RAR message to a PCEF, and the message contains PCC rule 2 and a resource sharing PCC rule name (which is a rule name of PCC rule 1 here). It is indicated that resources of the two PCC rules are shared when PCC rule 2 and PCC rule 1 are bound to the same bearer, that is, a GBR occupied by the two rules adopts a larger value between values of GBRs in the two rules and an MBR adopts a larger value between values of MBRs in the two rules. During specific implementation, the format of the PCC rule is extended as follows:

```
   Charging-Rule-Definition::=<AVP Header: 1003>
                              {Charging-Rule-Name}//rule name
                              [Service-Identifier]
                              [Rating-Group]
                              *[Flow-Information]//flow description information
                              [Flow-Status]//flow status, which is valued to be
                              DISABLE here
                              [QoS-Information]//QoS information, further
                              containing a QCI, an ARP, a GBR and an MBR
              [Share-Resource-Rule-Name] sharing PCC rule name
                                     [Reporting-Level]
                                     [Online]
                                     [Offline]
                                     [Metering-Method]
                                     [Precedence]
                                     [AF-Charging-Identifier]
                                     *[Flows]
                                     [Monitoring-Key]
                                     *[AVP]
```

Step 2420: the PCRF returns an RAA message to the P-CSCF.

Step 2422: the PCEF installs and enforces PCC rule 2, and enforces bearer binding according to PCC rule 2. The PCEF according to the QCI/APR in PCC rule 2binds PCC rule 2 to a bearer to which PCC rule 1 is bound, and respectively sets a GBR and MBR of the bearer to be a larger of values of the two rules according to the resource sharing indication and the sharing PCC rule name. For a video phone, the PCEF binds PCC rule 2a to a bearer to which PCC rule 1a is bound, sets a GBR and MBR of the bearer to still be 23kps, binds PCC rule 2b to a bearer to which PCC rule 1b is bound, and sets a GBR and MBR of the bearer to still be 700kps.

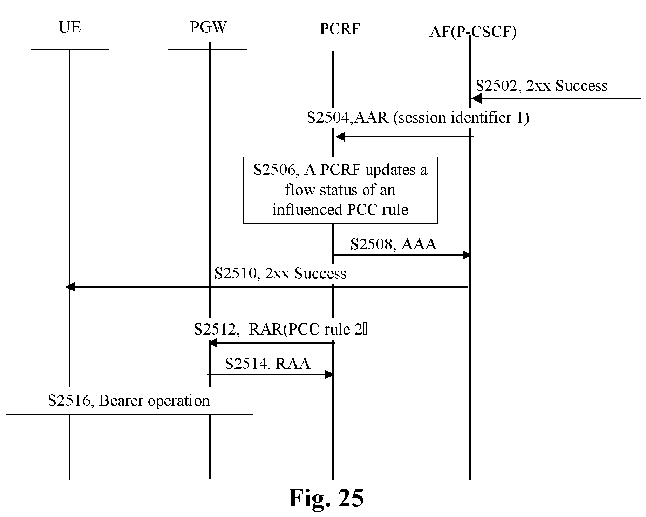

Fig. 25 is a flowchart of initiating a new IMS session and enabling access control by a P-CSCF in a scenario without a BBERF according to embodiment 2 of the present disclosure, and as shown in Fig. 25, the flow includes the following steps.

Step 2502: the P-CSCF receives a 2xx success message, and the message contains session identifier 2.

Step 2504: the P-CSCF sends a Diameter AAR message to the PCRF to request to enable access control of the service, and a Diameter session identifier in the message is session identifier 1.

Step 2506: the PCRF updates flow status information of the influenced PCC rule, and enables access control, that is, the PCRF enables bidirectional access control of PCC rule 2 to enable the UE to send data to an opposite end and enable the opposite end to send data to the UE.

Step 2508: the PCRF returns an AAA message to the P-CSCF (i.e. the AF of the P-CSCF).

Step 2510: the P-CSCF forwards the 2xx success message to the UE.

Step 2512: the PCRF sends a Diameter RAR message containing updated PCC rule 2 to a PCEF.

Step 2514: the PCEF returns an acknowledgement message to the PCRF.

Step 2516: the PCEF updates PCC rule 2, and updates a TFT of a bearer, that is, the PCEF enables access control in the TFT and sends the updated TFT to the UE.

Then, the UE may normally execute a second IMS service, and the first IMS service is in a call hold state.

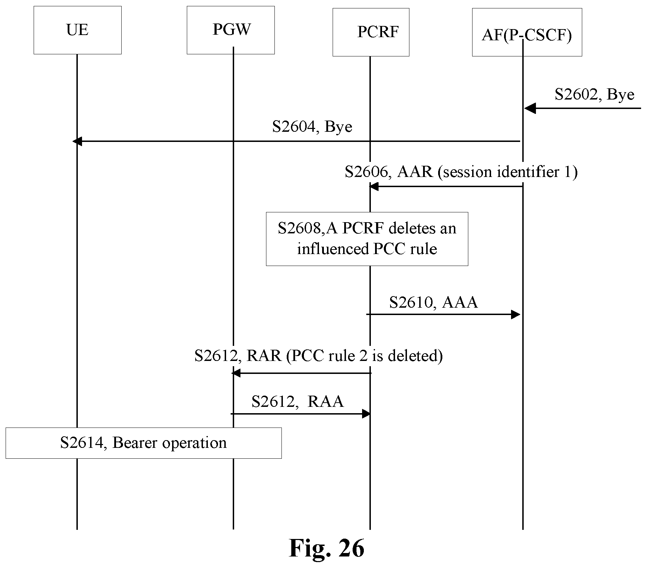

Fig. 26 is a flowchart of terminating a second IMS session and releasing a related resource after UE executes flows shown in Fig. 24 and Fig. 25 according to embodiment 3 of the present disclosure, and as shown in Fig. 26, the flow includes the following steps.

Step 2602: the P-CSCF receives a Bye message, and terminates an IMS session, and the message contains session identifier 2.

Step 2604: the P-CSCF forwards the Bye message to UE.

Step 2606: the P-CSCF (i.e. the AF of the P-CSCF) sends an AAR message to the PCRF, and the message contains session identifier 1 and contains Media-Component-Description AVP (Media-Component-Number identifier) corresponding to the second IMS session, and a value of Flow-Status AVP is DISABLE.

Step 2608: the PCRF deletes the influenced PCC rule, i.e. PCC rule 2.

Step 2610: the PCRF returns an AAA message to the P-CSCF (i.e. the AF of the P-CSCF).

Step 2612: the PCRF sends an RAR message to the PCEF to request to delete PCC rule 2.

Step 2614: the PCEF deletes PCC rule 2, that is, the PCEF deletes a filter of PCC rule 2 from a TFT of a bearer to which PCC rule 2 is bound, and sets a GBR and MBR of the bearer to be a GBR and MBR in PCC rule 1. For a video phone, the PCEF deletes a filter of PCC rule 2a from a TFT of a bound bearer, sets a GBR and MBR of the bearer to still be 23kps, deletes a filter of PCC rule 2b from a TFT of a bound bearer, and sets a GBR and MBR of the bound bearer to still be 700kps. The PCEF notifies UE of the above operation.

Embodiment 2 merely describes the flow of initiating another IMS session after a user holds an IMS session. A flow of initiating another IMS session after the user holds multiple IMS sessions is similar. Similarly, two or more than two PCC rules bound to the same bearer may share resources, and a total resource GBR and MBR occupied by these PCC rules is a largest GBR and MBR in these PCC rules. When merely these PCC rules are bound to the bearer, a GBR or MBR of the bearer is respectively set to be a maximum GBR or MBR in these PCC rules; and when there is another PCC rule bound to the bearer, the GBR or MBR of the bearer is respectively set to be a sum of the maximum GBR or MBR in these PCC rules sharing the resources and a GBR or MBR of the other PCC rule.

In embodiment 2, the P-CSCF contains the resource sharing indication in an established Rx session to explicitly indicate that the newly provided service information may share the resource of the service information provided before, and other implementation methods may also be adopted in other embodiments. For example, the PCRF makes a judgment according to a configuration. For example, when a media type of the service information received by the PCRF is consistent with a media type of the service information received before and access control of a media of the service information received before is in an off state, the PCRF determines that the media of the newly received service information may share a resource with the media of the service information received before.

In embodiment 2, for a video phone, the PCRF makes a PCC rule for a video stream and an audio stream respectively. For a video phone in call hold, access control of the PCC rules for both the video stream and the audio stream is in an off state. In other embodiments, a PCC rule may be made for an RTP stream and RTCP stream in the video stream and the audio stream respectively. For the video phone in call hold, merely the RTP stream is in the off state, and the RTCP stream is in an on state. Under such a condition, PCC rules corresponding to RTP streams, bound to the same bearer, corresponding to two IMS sessions may share resources, while RTCP streams may not share resources. Therefore, the PCRF adds Share-Resource-Rule-Name (which is valued to be a PCC rule name corresponding to the RTP stream of the first IMS session) into the PCC rule corresponding to the RTP stream of the second IMS session.

Descriptions are made for a call hold scenario in embodiment 1 and embodiment 2, and a similar method is also applicable for call waiting. According to an existing call waiting process, the merely difference is that a call hold process of the first IMS session is implemented after resource preservation of the second IMS session. That is, after the flows shown in Fig. 2 and Fig. 3 are executed, the P-CSCF performs resource preservation for the second IMS session initiated by the PCRF, the P-CSCF may provide resource sharing indication information, and the PCRF may indicate the PCEF to perform resource sharing for a PCC rule of the first IMS session and a newly provisioned PCC rule when issuing the PCC rule corresponding to the second IMS session. Then, the P-CSCF may notify the PCRF of disabling access control of the first IMS session. Therefore, for a call waiting scenario, extension of an Rx interface and the extension of a Gx interface are consistent for the call hold scenario. In such a scenario, when the media type of service information received by the PCRF is consistent with the media type of the service information received before, the PCRF determines that the media of the newly received service information may share the resource with the media of the service information received before.

For a scenario with a BBERF, a manner of the embodiment may be adopted for implementing interaction between the P-CSCF (AF) and the PCRF, and interaction between the PCRF and the BBERF may be implemented as follows: according to a related art, the PCRF may make a corresponding QoS rule according to a PCC rule, the PCRF may add a resource sharing rule name (Share-Resource-Rule Name) in the QoS rule by adopting a processing method for the PCC rule in the abovementioned embodiments, so as to indicate the BBERF to enforce resource sharing operation when the PCRF determines that two or more than two QoS rules may share a resource, that is, the two or more than two QoS rules bound to the same bearer may share resources, and a total resource GBR or MBR occupied by these QoS rules is a larger GBR or MBR in these QoS rules. When merely these QoS rules are bound to the bearer, a GBR or MBR of the bearer is respectively set to be a maximum GBR and MBR in these QoS rules; and when there is another QoS rule bound to the bearer, the GBR or MBR of the bearer is respectively set to be a sum of the maximum GBR or MBR in these QoS rules sharing the resources and a GBR or MBR of the other QoS rule. In addition, the sharing QoS rule name may also not be contained in the QoS rule, and instead, the rule name of QoS rule 1 is contained in QoS-Rule-Install AVP of QoS rule 2 to identify resource sharing of QoS rule 1 and QoS rule 2.

### Embodiment 3

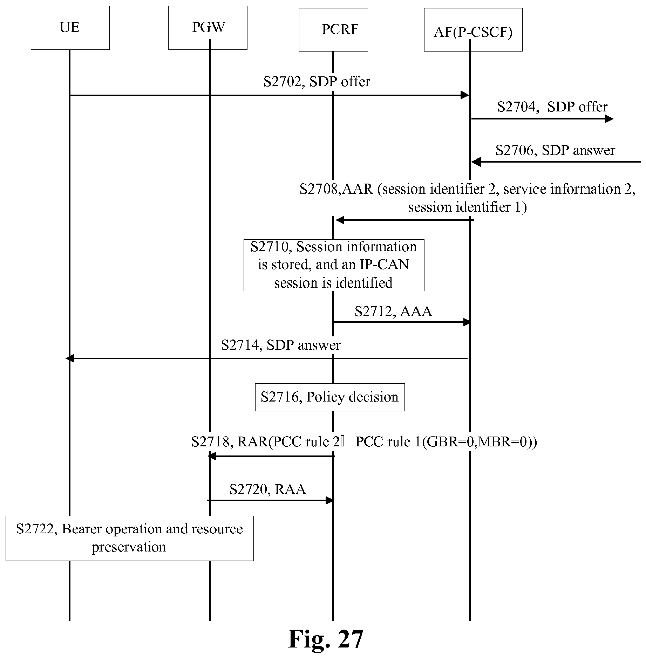

Fig. 27 is a flowchart of initiating a new IMS session and providing service information by a P-CSCF after UE executes flows shown in Fig. 2, Fig. 3 and Fig. 4 in a scenario without a BBERF according to embodiment 3 of the present disclosure. In the flow, the P-CSCF provides the service information for a PCRF by adopting a created Rx Diameter session without influence on a Gx interface. As shown in Fig. 27, the flow includes the following steps.

Step 2702: the P-CSCF receives an SDP offer in a SIP message, and an SDP parameter defined by the calling UE is contained, and the message further contains a new session identifier (session identifier 2) to indicate that the UE initiates a new session.

Step 2704: the P-CSCF forwards the SDP offer to a termination side.

Step 2706: the P-CSCF receives a negotiated SDP parameter from the termination side.

Step 2708: the P-CSCF acquires related service information from the SDP parameter, such as an IP address, a port number, a media type and a QoS requirement. The P-CSCF (i.e. an AF of the P-CSCF) sends a Diameter AAR message to the PCRF, and establishes a new Rx Diameter session (represented as Rx session 2). A session identifier (represented as session identifier 2) of the Diameter session and the service information are contained in the AAR message. In addition, the AAR message further contains session identifier 1 indicating that the service information contained in Rx session 2 may share a resource for service information with the same media type in Rx session 1. For a video phone, Media-Component-Description of which Media-Type is VIDEO in Rx session 2 may share a resource of Media-Component-Description of which Media-Type is VIDEO in Rx session 1; and Media-Component-Description of which Media-Type is AUDIO in Rx session 2 may share a resource of Media-Component-Description of which Media-Type is AUDIO in Rx session 1. At this moment, access control is disabled.

A format of the extended AAR message is as follows:

```
   <AA-Request>::=<Diameter Header: 265, REQ, PXY>
                    <Session-Id>//containing Diameter session identifier, which is
                    session identifier 2 here
                          [Share-Resource-Session-Id]// session identifier with
```

```
                          resource sharing requirement, 
```

```
which is valued to be session identifier 1 here
                    {Auth-Application-Id}
```

```
                    {Origin-Host}
                    {Origin-Realm}
                    {Destination-Realm}
                    [Destination-Host]
                    [IP-Domain-Id]
                    [AF-Application-Identifier]
                  *[Media-Component-Description]//containing service information
                    [Service-Info-Status]
                    [AF-Charging-Identifier]
                  '[Specific-Action]
                  '[Subscription-Id]
                  *[Supported-Features]
                    [Reservation-Priority]
                    [Framed-IP-Address]
                    [Framed-IPv6-Prefix]
                       [Called-Station-Id]
                    [Service-URN]
                    [Rx-Request-Type]
                    [Origin-State-Id]
                    '[Proxy-Info]
                    *[Route-Record]
                    *[AVP]
```

Step 2710: the PCRF stores the received service information, and enforces session binding.

Step 2712: the PCRF returns a Diameter AAA message to the P-CSCF (i.e. the AF of the P-CSCF).

Step 2714: the P-CSCF forwards the SDP parameter to the UE.

Step 2716: the PCRF makes a policy decision to make a PCC rule (represented as PCC rule 2) according to the received service information. The PCRF judges whether the two sessions share a resource according to Share-Resource-Session-Id in the AAR message, and determines that PCC rule 2 and PCC rule 1 may share the resource. The PCRF sets values of a QCI and ARP in PCC rule 2 to be consistent with the QCI and ARP in PCC rule 1 (since the two pieces of service information provided by the P-CSCF have the same Media-Type, PCC rule 1 and PCC rule 2 made by the PCRF for the same UE usually have the same QCI/ARP). In addition, the PCRF sets values of a GBR and MBR for PCC rule 2. Meanwhile, the PCRF sets both a GRB and MBR of PCC rule 1 to be 0. At this moment, access control of PCC rule 2 is also disabled.

For a video phone, the PCRF makes a new PCC rule for an audio stream and a video stream respectively, a QCI/ARP of the PCC rule (PCC rule 2a) corresponding to the audio stream is consistent with the QCI/ARP of PCC rule 1a, and a QCI/ARP of the PCC rule (PCC rule 2b) corresponding to the video stream is consistent with the QCI/ARP of PCC rule 1b. A GBR and MBR of PCC rule 2a (QCI-1) are 23kps, and a GBR and MBR of PCC rule 2b (QCI-2) are 700kps. At this moment, the PCRF sets GBRs and MBRs of both PCC rule 1a and PCC rule 1b to be 0.

Step 2718: the PCRF sends an RAR message to a PCEF, and the message contains PCC rule 2 and updated PCC rule 1.

Step 2720: the PCRF returns an RAA message to the P-CSCF (the AF of the P-CSCF).

Step 2722: the PCEF installs and enforces PCC rule 2, and enforces bearer binding according to PCC rule 2. The PCEF according to the QCI/APR in PCC rule 2 binds PCC rule 2 to a bearer to which PCC rule 1 is bound. Since the GBR and MBR of PCC rule 1 are set to be 0, a total accumulated GBR and MBR of PCC rule 1 and PCC rule 2 are the GBR and MBR of PCC rule 2. The PCEF adds a filter template of the PCC rule to a TFT of the bearer, and updates and sends a GBR and MBR of the bearer to the UE. For a video phone, the PCEF binds PCC rule 2a to a bearer to which PCC rule 1a is bound, sets a GBR and MBR of the bearer to still be 23kps, binds PCC rule 2b to a bearer to which PCC rule 1b is bound, and sets a GBR and MBR of the bearer to still be 700kps.

A flow of enabling access control of the second IMS session by the UE is consistent with flow in Fig. 3. Then, the UE may normally execute the second IMS session, and the first IMS session is in a call hold state.

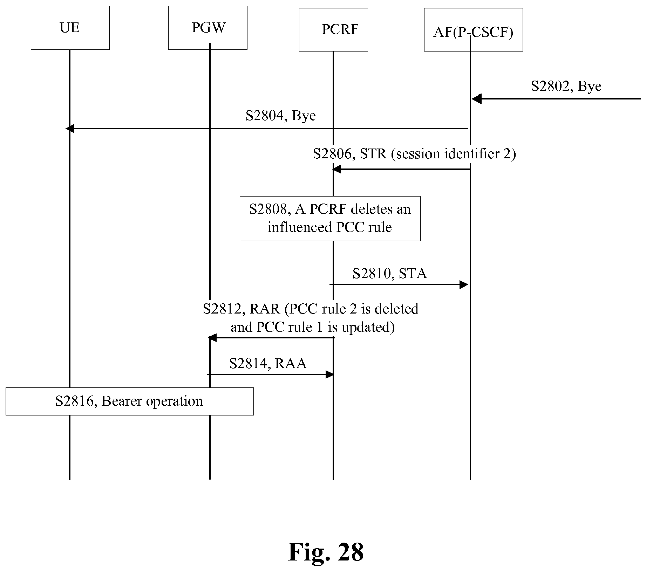

Fig. 28 is a flowchart of terminating a second IMS session and releasing a related resource after UE executes a flow shown in Fig. 27 and enables access control for communication according to embodiment 3 of the present disclosure, and as shown in Fig. 28, the flow includes the following steps.

Step 2802: the P-CSCF receives a Bye message, and terminates an IMS session, and the message contains session identifier 2.

Step 2804: the P-CSCF forwards the Bye message to UE.

Step 2806: the P-CSCF (i.e. the AF of the P-CSCF) sends an STR message to the PCRF, and the message contains session identifier 2.

Step 2808: the PCRF deletes the influenced PCC rule, i.e. PCC rule 2, and in addition, the PCRF recovers the GBR and MBR of PCC rule 1 to be original values.

Step 2810: the PCRF returns an STA message to the P-CSCF (i.e. the AF of the P-CSCF).

Step 2812: the PCRF sends an RAR message to the PCEF to request to delete PCC rule 2 and request to update PCC rule 1.

Step 2814: the PCEF deletes PCC rule 2, that is, the PCEF deletes a filter of PCC rule 2 from a TFT of a bearer to which PCC rule 2 is bound, and sets a GBR and MBR of the bearer to be the GBR and MBR in PCC rule 1. For a video phone, the PCEF deletes a filter of PCC rule 2a from a TFT of a bound bearer, sets a GBR and MBR of the bearer to still be 23kps, deletes a filter of PCC rule 2b from a TFT of a bound bearer, and sets a GBR and MBR of the bound bearer to still be 700kps. The PCEF notifies UE of the above operation.

In embodiment 3, the P-CSCF contains an Rx Diameter session identifier of a resource sharing session in an Rx session of a new session to associate the two sessions, and other methods may also be adopted for implementation in other embodiments. For example, a unique shared session identifier (that is, the unique shared session identifier (i.e. the identifier in the first Rx session) is contained in Step 210 in Fig. 2)) is allocated when an Rx session of a first session is established, and then the shared session identifier is contained when an Rx session corresponding to any corresponding resource sharing session is subsequently established, or, a unique shared session identifier (that is, the unique shared session identifier is contained in Step 404 in Fig. 4) is allocated when the Rx session of the first session is modified, and then the shared session identifier is contained when an Rx session corresponding to any resource sharing session is subsequently established. In addition, a configuration manner may also be adopted for implementation. For example, when a media type of service information received by the PCRF is consistent with a media type of service information which is received before and access control of a media of the service information which is received before is in an off state, the PCRF determines that a media of the newly received service information may share a resource with the media of the service information which is received before.

In embodiment 3, for a video phone, the PCRF makes a PCC rule for a video stream and an audio stream respectively. For a video phone in call hold, access control of the PCC rules for both the video stream and the audio stream is in an off state. In other embodiments, a PCC rule may be made for an RTP stream and RTCP stream in the video stream and the audio stream respectively. For the video phone in call hold, merely the RTP stream is in the off state, and the RTCP stream is in an on state. Under such a condition, PCC rules corresponding to RTP streams, bound to the same bearer, corresponding to two IMS sessions may share resources, while RTCP streams may not share resources. Therefore, the PCRF sets the GBR and MBR of the PCC rule of the RTP stream corresponding to the first IMS session to be 0.

### Embodiment 4

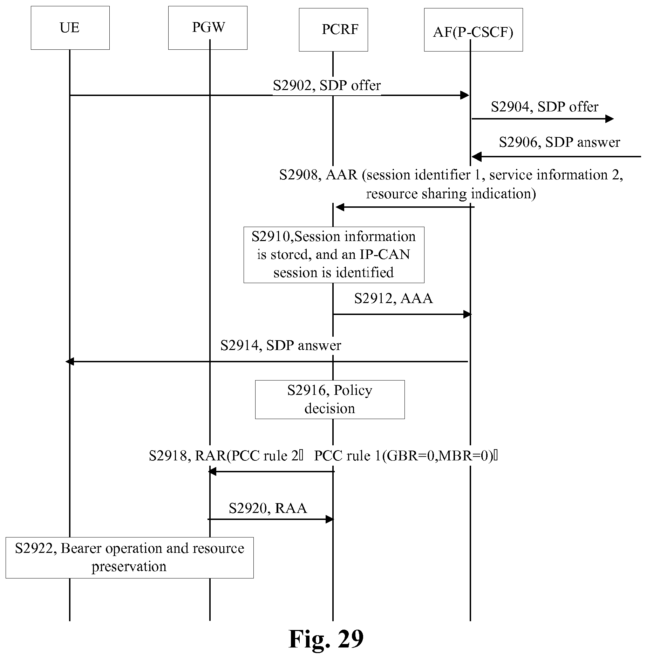

Fig. 29 is a flowchart of initiating a new IMS session and providing service information by a P-CSCF after UE executes flows shown in Fig. 2, Fig. 3 and Fig. 4 in a scenario without a BBERF according to embodiment 4 of the present disclosure, and in the flow, the P-CSCF provides the service information for a PCRF by adopting an established Rx Diameter session. As shown in Fig. 29, the flow includes the following steps.

Step 2902: the P-CSCF receives an SDP offer in a SIP message, and an SDP parameter defined by the calling UE is contained, and the message further contains a new session identifier (session identifier 2) to indicate that the UE initiates a new session.

Step 2904: the P-CSCF forwards the SDP offer to a termination side.

Step 2906: the P-CSCF receives a negotiated SDP parameter from the termination side.

Step 2908: the P-CSCF acquires related service information from the SDP parameter, such as an IP address, a port number, a media type and a QoS requirement. The P-CSCF (i.e. an AF of the P-CSCF) sends a Diameter AAR message to the PCRF, and modifies the established Rx Diameter session. Session identifier 1, the service information and a resource sharing indication are contained in the AAR message. It is indicated that the service information in the AAR message may share a resource for service information with the same media type provided before. For a video phone, newly provided Media-Component-Description of which Media-Type is VIDEO may share a resource of Media-Component-Description, of which Media-Type is VIDEO, provided before; and newly provided Media-Component-Description of which Media-Type is AUDIO may share a resource of Media-Component-Description, of which Media-Type is AUDIO, provided before. A value of Media-Component-Number of the newly provided Media-Component-Description should be different from a value of Media-Component-Number of the Media-Component-Description provided before. At this moment, access control is disabled.

A format of the extended AAR message is as follows:

```
   <AA-Request>::=<Diameter Header: 265, REQ, PXY>
                   <Session-Id>//containing Diameter session identifier, which is
                   session identifier 1 here
                      [Share-Resource-Indication]// resource sharing indication
                  {Auth-Application-Id}
                  {Origin-Host}
                  {Origin-Realm}
                  {Destination-Realm}
                   [Destination-Host]
                   [IP-Domain-Id]
                   [AF-Application-Identifier]
                 *[Media-Component-Description]//containing service information
                   [Service-Info-Status]
                   [AF-Charging-Identifier]
                 *[Specific-Action]
                 '[Subscription-Id]
                 *[Supported-Features]
                   [Reservation-Priority]
                   [Framed-IP-Address]
                   [Framed-IPv6-Prefix]
                     [Called-Station-Id]
                   [Service-URN]
                   [Rx-Request-Type]
                   [Origin-State-Id]
                 '[Proxy-Info]
                 *[Route-Record]
                 *[AVP]
```

Step 2910: the PCRF stores the received service information, and enforces session binding.

Step 2912: the PCRF returns a Diameter AAA message to the P-CSCF (i.e. the AF of the P-CSCF).

Step 2914: the P-CSCF forwards the SDP parameter to the UE.

Step 2916: the PCRF makes a policy decision to make a PCC rule (represented as PCC rule 2) according to the received service information. The PCRF judges whether the service information shares a resource according to Share-Resource-Indication in the AAR message (that is, the newly provided service information may share a resource of service information of the same Media Type provided before), and determines that PCC rule 2 and PCC rule 1 may share the resource. The PCRF sets values of a QCI and ARP in PCC rule 2 to be consistent with those in PCC rule 1 (since the two pieces of service information provided by the P-CSCF have the same Media-Type, PCC rule 1 and PCC rule 2 made by the PCRF for the same UE usually have the same QCI/ARP). In addition, the PCRF sets the values of the GBR and MBR of PCC rule 2, and meanwhile, the PCRF sets both the GBR and MBR of PCC rule 1 to be 0. At this moment, access control of PCC rule 2 is also disabled.

For a video phone, the PCRF makes a new PCC rule for a video stream and an audio stream respectively, a QCI/ARP of the PCC rule (PCC rule 2a) corresponding to the audio stream is consistent with a QCI/ARP of PCC rule 1a, and a QCI/ARP of the PCC rule (PCC rule 2b) corresponding to the video stream is consistent with a QCI/ARP of PCC rule 1b. A GBR or MBR of PCC rule 2a (QCI-1) is 23kps, and a GBR or MBR of PCC rule 2b (QCI-2) is 700kps. Meanwhile, the PCRF sets the GBRs and MBRs of both PCC rule 1a and PCC rule 1b to be 0.

Step 2918: the PCRF sends an RAR message to a PCEF, and the message contains PCC rule 2 and an updated PCC rule 1.

Step 2920: the PCRF returns an RAA message to the P-CSCF.

Step 2922: the PCEF installs and enforces PCC rule 2, and enforces bearer binding according to PCC rule 2. The PCEF binds PCC rule 2 to a bearer to which PCC rule 1 is bound according to the QCI/APR in PCC rule 2. Since the GBR and MBR of PCC rule 1 are set to be 0, a total accumulated GBR and MBR of PCC rule 1 and PCC rule 2 are the GBR and MBR of PCC rule 2. The PCEF adds a filter template of the PCC rule into a TFT of the bearer, and updates and sends a GBR and MBR of the bearer to the UE. For a video phone, the PCEF binds PCC rule 2a to a bearer to which PCC rule 1a is bound, sets a GBR and MBR of the bearer to still be 23kps, binds PCC rule 2b to a bearer to which PCC rule 1b is bound, and sets a GBR and MBR of the bearer to still be 700kps.

A flow of enabling access control the second IMS session by the UE is consistent with that in Fig. 3. Then, the UE may normally execute the second IMS session, and the first IMS session is in the call hold state.

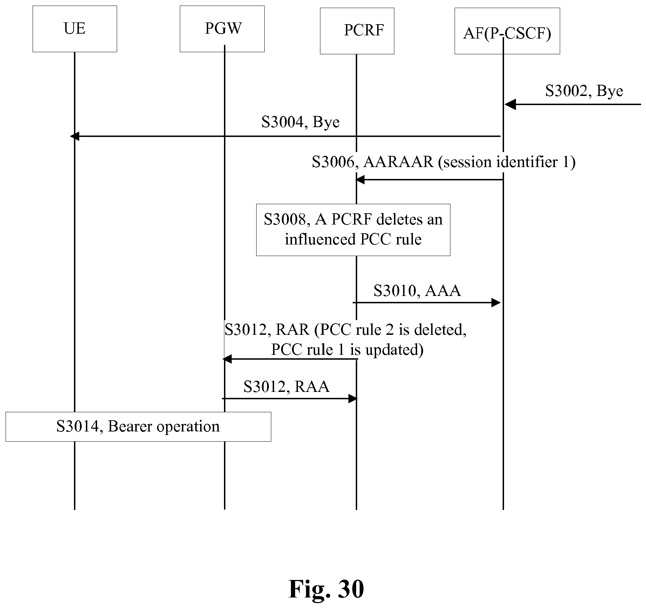

Fig. 30 is a flowchart of terminating a second IMS session and releasing a related resource after UE executes a flow shown in Fig. 29 and enables access control for communication according to embodiment 4 of the present disclosure, and as shown in Fig. 30, the flow includes the following steps.

Step 3002: the P-CSCF receives a Bye message, and terminates an IMS session, and the message contains session identifier 2.

Step 3004: the P-CSCF forwards the Bye message to UE.

Step 3006: the P-CSCF (i.e. the AF of the P-CSCF) sends an AAR message to the PCRF, and the message contains session identifier 1 and contains Media-Component-Description AVP (Media-Component-Number identifier) corresponding to the second IMS session, and a value of Flow-Status AVP is DISABLE.

Step 3008: the PCRF deletes the influenced PCC rule, i.e. PCC rule 2, and in addition, the PCRF recovers the GBR and MBR of PCC rule 1 to be original values.

Step 3010: the PCRF returns an AAA message to the P-CSCF (i.e. the AF of the P-CSCF).

Step 3012: the PCRF sends an RAR message to the PCEF to request to delete PCC rule 2 and request to update PCC rule 1.

Step 3014: the PCEF deletes PCC rule 2, that is, the PCEF deletes a filter of PCC rule 2 from a TFT of a bearer to which PCC rule 2 is bound, and sets a GBR and MBR of the bearer to be a GBR and MBR in PCC rule 1. For a video phone, the PCEF deletes a filter of PCC rule 2a from a TFT of a bound bearer, sets a GBR and MBR of the bearer to still be 23kps, deletes a filter of PCC rule 2b from a TFT of a bound bearer, and sets a GBR and MBR of the bound bearer to still be 700kps. The PCEF notifies UE of the above operation.

In embodiment 4, the P-CSCF contains the resource sharing indication in an established Rx session to explicitly indicate that the newly provided service information may share the resource of the service information provided before, and other implementation methods may also be adopted in other embodiments. For example, the PCRF makes a judgment according to a configuration. For example, when a media type of the service information received by the PCRF is consistent with a media type of the service information received before and access control of a media of the service information received before is in an off state, the PCRF determines that the media of the newly received service information may share a resource with the media of the service information received before.

In embodiment 4, for a video phone, the PCRF makes a PCC rule for a video stream and an audio stream respectively. For a video phone in call hold, access control of the PCC rules for both the video stream and the audio stream is in an off state. In other embodiments, a PCC rule may be made for an RTP stream and RTCP stream in the video stream and the audio stream respectively. For the video phone in call hold, merely the RTP stream is in the off state, and the RTCP stream is in an on state. Under such a condition, PCC rules corresponding to RTP streams, bound to the same bearer, corresponding to two IMS sessions may share resources, while RTCP streams is not able to share resources. Therefore, the PCRF sets the GBR and MBR of the PCC rule of the RTP stream corresponding to the first IMS session to be 0.

In embodiment 3 and embodiment 4, the PCRF sets a GBR and MBR of a PCC rule which temporally does not use the resource (that is, access control of the PCC rule is in an off state) to be 0. When the GBR or MBR of the PCC rule which temporally does not use the resource is larger than the GBR or MBR of a PCC rule which currently uses the resource, the method may cause the problem that the PCC rule is not able to apply for the original resource after being recovered (in case of current network resource shortage), and then other solutions may be adopted. For example, the GBR or MBR of the PCC rule which temporally does not use the resource are set to be a difference between an original GBR or MBR of the PCC rule and the GBR or MBR of the PCC rule which currently uses the resource. For a scenario where there are multiple PCC rules which temporally do not use resources, it is merely necessary to respectively set a sum of GBRs or MBRs of the PCC rules which temporally do not use the resources to be a difference between a maximum GBR or MBR in the PCC rules which temporally do not use the resources and the GBR or MBR of the PCC rule which currently uses the resource. That is, a value of GBR or MBR of the bound bearer is respectively set to be equal to a value of the PCC rule of which the GBR or MBR is maximum in these resource sharing PCC rules.

All of the abovementioned embodiments mainly describe resource sharing between media of IMS sessions, but the present disclosure is also applicable to a scenario of resource sharing of two media of other applications (that is, the AF may also be another application function besides the P-CSCF).

Although the PCRF makes the resource sharing policy according to the indication of the AF for the call hold or call waiting scenario in the embodiment, a resource sharing solution for the Gx interface may actually be applicable to any decision of the PCRF. That is, as long as the PCRF considers that two or more than two PCC or QoS rules may share a resource, the PCRF may indicate the PCEF or the BBERF to enforce resource sharing operation during resource preservation even without the indication of the AF.

Obviously, those skilled in the art should know that each component of each component or step of the present disclosure may be implemented by a universal computing device, and the components or steps may be concentrated on a single computing device or distributed on a network formed by a plurality of computing devices, and may optionally be implemented by programmable codes executable for the computing devices, so that the components or steps may be stored in a storage device for execution with the computing devices, the shown or described steps may be executed in sequences different from those described here in some circumstances, or may form each integrated circuit component respectively, or multiple components or steps therein may form a single integrated circuit component for implementation. As a consequence, the present disclosure is not limited to any specific hardware and software combination.

### Industrial Applicability

As mentioned above, by the abovementioned embodiments and example implementation mode, the problem that there exists a resource waste phenomenon in the related art because services corresponding to PCC or QoS rules bound to the same bearer may not be used at the same time is solved, and the effect of effectively saving resources is further achieved.

## Claims

1. A method for processing policy control, comprising:
receiving, by a policy enforcement function, first resource sharing indication information provided by a Policy and Charging Rules Function, PCRF, wherein first resource sharing indication information indicates that a second policy rule shares a resource with a first policy rule (5502) ; and
enforcing, by the policy enforcement function, a resource sharing operation for the second policy rule and the first policy rule according to the first resource sharing indication information (S504) ;
when the first policy rule and the second policy rule are Policy and Charging Control, PCC, rules, the policy enforcement function is a Policy and Charging Enforcement Function, PCEF; and when the first policy rule and the second policy rule are Quality of Service, QoS, rules, the policy enforcement function is a Bearer Binding and Event Report Function, BBERF;
wherein the first resource sharing indication information is a policy rule name of the first policy rule or an identifier contained in the first policy rule; the identifier contained in the first policy rule is provided when the first policy rule is initially provisioned or the first policy rule is modified;
wherein the method is **characterized in that** enforcing, by the policy enforcement function, the resource sharing operation for the second policy rule and the first policy rule according to the first resource sharing indication information comprises:
determining, by the policy enforcement function, that the second policy rule and the first policy rule are bound to a same bearer; and determining, by the policy enforcement function, that a Guaranteed Bit Rate, GBR, value occupied by the second policy rule and the first policy rule is a larger value between a GBR value occupied by the second policy rule and a GBR value occupied by the first policy rule.

2. The method as claimed in claim 1, after determining, by the policy enforcement function, that the GBR value occupied by the second policy rule and the first policy rule is the larger value between the GBR value occupied by the second policy rule and the GBR value occupied by the first policy rule, further comprising:
when the bearer is not bound with another policy rule besides the first policy rule and the second policy rule, determining according to the first resource sharing indication information, by the policy enforcement function, that a GBR value of the bearer is the larger value between the GBR value occupied by the second policy rule and the GBR value occupied by the first policy rule;
and/or,
when the bearer is further bound with another policy rule besides the first policy rule and the second policy rule, determining according to the first resource sharing indication information, by the policy enforcement function, that the GBR value of the bearer is a sum of a GBR value occupied by said another policy rule and the larger value between the GBR value occupied by the second policy rule and the GBR value occupied by the first policy rule.

3. The method as claimed in claim 1, wherein enforcing, by the policy enforcement function, the resource sharing operation for the second policy rule and the first policy rule according to the first resource sharing indication information comprises:
determining, by the policy enforcement function, that the second policy rule and the first policy rule are bound to a same bearer; and
determining, by the policy enforcement function, that a Maximum Bit Rate, MBR, value occupied by the second policy rule and the first policy rule is a larger value of an MBR value occupied by the second policy rule and an MBR value occupied by the first policy rule.

4. The method as claimed in claim 3, after determining, by the policy enforcement function, that the MBR value occupied by the second policy rule and the first policy rule is the larger value between the MBR value occupied by the second policy rule and the MBR value occupied by the first policy rule, further comprising:
when the bearer is not bound with another policy rule besides the first policy rule and the second policy rule, determining according to the first resource sharing indication information, by the policy enforcement function, that an MBR of the bearer is the larger value between the MBR value occupied by the second policy rule and the MBR value occupied by the first policy rule;
and/or,
when the bearer is further bound with another policy rule besides the first policy rule and the second policy rule, determining according to the first resource sharing indication information, by the policy enforcement function, that the MBR value of the bearer is a sum of an MBR value occupied by said another policy rule and the larger value between the MBR value occupied by the second policy rule and the MBR value occupied by the first policy rule.

5. The method as claimed in claim 1, wherein
the first resource sharing indication information is contained in the second policy rule or contained in an installation parameter of the second policy rule.

6. The method as claimed in claim 1, wherein
when services corresponding to the first policy rule and the second policy rule are session call services, the first resource sharing indication information is determined by the PCRF according to second resource sharing indication information provided by an Application Function, AF, wherein the second resource sharing indication information indicates that a second session call service corresponding to the second policy rule shares a resource with a first session call service corresponding to the first policy rule, wherein a media type of the first session call service is the same as the media type of the second session call service.

7. A device for processing policy control, applied to a policy enforcement function (206), comprising:
a first receiving component (92), configured to receive first resource sharing indication information provided by a Policy and Charging Rules Function, PCRF, wherein first resource sharing indication information indicates that a second policy rule shares a resource with a first policy rule; and
an enforcement component (94), configured to enforce a resource sharing operation for the second policy rule and the first policy rule according to the first resource sharing indication information;
when the first policy rule and the second policy rule are Policy and Charging Control, PCC, rules, the policy enforcement function is a Policy and Charging Enforcement Function, PCEF; and when the first policy rule and the second policy rule are Quality of Service, QoS, rules, the policy enforcement function is a Bearer Binding and Event Report Function, BBERF;
wherein the first resource sharing indication information is a policy rule name of the first policy rule or an identifier contained in the first policy rule; the identifier contained in the first policy rule is provided when the first policy rule is initially provisioned or the first policy rule is modified;
wherein the device is **characterized in that** the enforcement component comprises:
a first determination element (102), configured to determine that the second policy rule and the first policy rule are bound to a same bearer; and
a second determination element (104), configured to determine that a Guaranteed Bit Rate, GBR, value occupied by the second policy rule and the first policy rule is a larger value between a GBR value occupied by the second policy rule and a GBR value occupied by the first policy rule.

8. The device as claimed in claim 7, wherein the enforcement component comprises:
a third determination element, configured to, when the bearer is not bound with another policy rule besides the first policy rule and the second policy rule, determine according to the first resource sharing indication information that a GBR value of the bearer is the larger value between the GBR value occupied by the second policy rule and the GBR value occupied by the first policy rule;
and/or,
a fourth determination element, configured to, when the bearer is further bound with another policy rule besides the first policy rule and the second policy rule, determine according to the first resource sharing indication information that the GBR value of the bearer is a sum of a GBR value occupied by said another policy rule and the larger value between the GBR value occupied by the second policy rule and the GBR value occupied by the first policy rule.

9. The device as claimed in claim 7, wherein the enforcement component comprises:
a fifth determination element, configured to determine that the second policy rule and the first policy rule are bound to a same bearer; and
a sixth determination element, configured to determine that a Maximum Bit Rate, MBR, value occupied by the second policy rule and the first policy rule is a larger value of an MBR value occupied by the second policy rule and an MBR value occupied by the first policy rule.

10. The device as claimed in claim 9, wherein the enforcement component further comprises:
a seventh determination element, configured to, when the bearer is not bound with another policy rule besides the first policy rule and the second policy rule, determine according to the first resource sharing indication information that an MBR of the bearer is the larger value between the MBR value occupied by the second policy rule and the MBR value occupied by the first policy rule;
and/or,
an eighth determination element, configured to, when the bearer is further bound with another policy rule besides the first policy rule and the second policy rule, determine according to the first resource sharing indication information that the MBR value of the bearer is a sum of an MBR value occupied by said another policy rule and the larger value between the MBR value occupied by the second policy rule and the MBR value occupied by the first policy rule.

## Patentansprüche

1. Verfahren zum Verarbeiten von Richtlinienkontrolle, umfassend:
Empfangen, durch eine Richtliniendurchsetzungsfunktion, von ersten Ressourcenteilungsanzeigeinformationen, die durch eine Richtlinien- und Abrechnungsregelfunktion, PCRF, bereitgestellt werden, wobei erste Ressourcenteilungsanzeigeinformationen anzeigen, dass eine zweite Richtlinienregel eine Ressource mit einer ersten Richtlinienregel (S502) teilt; und
Durchsetzen, durch die Richtliniendurchsetzungsfunktion, eines Ressourcenteilungsvorgangs für die zweite Richtlinienregel und die erste Richtlinienregel gemäß den ersten Ressourcenteilungsanzeigeinformationen (S504);
wenn die erste Richtlinienregel und die zweite Richtlinienregel Richtlinien- und Abrechnungskontrolle-Regeln, PCC-Regeln, sind, die Richtliniendurchsetzungsfunktion eine Richtlinien- und Abrechnungsdurchsetzungsfunktion, PCEF, ist; und wenn die erste Richtlinienregel und die zweite Richtlinienregel die Dienstgüte-Regeln, QoS-Regeln, sind, die Richtliniendurchsetzungsfunktion eine Trägerbindungs- und Ereignisberichtsfunktion, BBERF, ist;
wobei die ersten Ressourcenteilungsanzeigeinformationen ein Richtlinienregelname der ersten Richtlinienregel oder ein Bezeichner sind, der in der ersten Richtlinienregel enthalten ist; der Bezeichner, der in der ersten Richtlinienregel enthalten ist, bereitgestellt wird, wenn die erste Richtlinienregel anfänglich vorgesehen wird oder die erste Richtlinienregel modifiziert wird;
wobei das Verfahren **dadurch gekennzeichnet ist, dass** das Durchsetzen, durch die Richtliniendurchsetzungsfunktion, des Ressourcenteilungsvorgangs für die zweite Richtlinienregel und die erste Richtlinienregel gemäß den ersten Ressourcenteilungsanzeigeinformationen umfasst:
Bestimmen, durch die Richtliniendurchsetzungsfunktion, dass die zweite Richtlinienregel und die erste Richtlinienregel an einen gleichen Träger gebunden sind; und Bestimmen, durch die Richtliniendurchsetzungsfunktion, dass ein garantierte-Bitrate-Wert, GBR-Wert, der durch die zweite Richtlinienregel und die erste Richtlinienregel belegt ist, ein größerer Wert zwischen einem GBR-Wert, der durch die zweite Richtlinienregel belegt ist, und einem GBR-Wert ist, der durch die erste Richtlinienregel belegt ist.

2. Verfahren nach Anspruch 1, nach einem Bestimmen, durch die Richtliniendurchsetzungsfunktion, dass der GBR-Wert, der durch die zweite Richtlinienregel und die erste Richtlinienregel belegt ist, der größere Wert zwischen dem GBR-Wert, der durch die zweite Richtlinienregel belegt ist, und dem GBR-Wert ist, der durch die erste Richtlinienregel belegt ist, ferner umfassend:
wenn der Träger nicht mit einer anderen Richtlinienregel neben der ersten Richtlinienregel und der zweiten Richtlinienregel verbunden ist, Bestimmen gemäß den ersten Ressourcenteilungsanzeigeinformationen, durch die Richtliniendurchsetzungsfunktion, dass ein GBR-Wert des Trägers der größere Wert zwischen dem GBR-Wert, der durch die zweite Richtlinienregel belegt ist, und dem GBR-Wert ist, der durch die erste Richtlinienregel belegt ist;
und/oder
wenn der Träger ferner mit einer anderen Richtlinienregel neben der ersten Richtlinienregel und der zweiten Richtlinienregel verbunden ist, Bestimmen gemäß den ersten Ressourcenteilungsanzeigeinformationen, durch die Richtliniendurchsetzungsfunktion, dass der GBR-Wert des Trägers eine Summe eines GBR-Werts, der durch die andere Richtlinienregel belegt ist, und des größeren Werts zwischen dem GBR-Wert, der durch die zweite Richtlinienregel belegt ist, und dem GBR-Wert, der durch die erste Richtlinienregel belegt ist, ist.

3. Verfahren nach Anspruch 1, wobei das Durchsetzen, durch die Richtliniendurchsetzungsfunktion, des Ressourcenteilungsvorgangs für die zweite Richtlinienregel und die erste Richtlinienregel gemäß den ersten Ressourcenteilungsanzeigeinformationen umfasst:
Bestimmen, durch die Richtliniendurchsetzungsfunktion, dass die zweite Richtlinienregel und die erste Richtlinienregel an einen gleichen Träger gebunden sind; und
Bestimmen, durch die Richtliniendurchsetzungsfunktion, dass ein maximale-Bitrate-Wert, MBR-Wert, der durch die zweite Richtlinienregel und die erste Richtlinienregel belegt ist, ein größerer Wert eines MBR-Werts, der durch die zweite Richtlinienregel belegt ist, und eines MBR-Werts ist, der durch die erste Richtlinienregel belegt ist.

4. Verfahren nach Anspruch 3, nach dem Bestimmen, durch die Richtliniendurchsetzungsfunktion, dass der MBR-Wert, der durch die zweite Richtlinienregel und die erste Richtlinienregel belegt ist, der größere Wert zwischen dem MBR-Wert, der durch die zweite Richtlinienregel belegt ist, und dem MBR-Wert ist, der durch die erste Richtlinienregel belegt ist, ferner umfassend:
wenn der Träger nicht mit einer anderen Richtlinienregel neben der ersten Richtlinienregel und der zweiten Richtlinienregel verbunden ist, Bestimmen gemäß den ersten Ressourcenteilungsanzeigeinformationen, durch die Richtliniendurchsetzungsfunktion, dass ein MBR-Wert des Trägers der größere Wert zwischen dem MBR-Wert, der durch die zweiten Richtlinienregel belegt ist, und dem MBR-Wert ist, der durch die erste Richtlinienregel belegt ist;
und/oder
wenn der Träger ferner mit einer anderen Richtlinienregel neben der ersten Richtlinienregel und der zweiten Richtlinienregel verbunden ist, Bestimmen, gemäß den ersten Ressourcenteilungsanzeigeinformationen, durch die Richtliniendurchsetzungsfunktion, dass der MBR-Wert des Trägers eine Summe eines MBR-Werts, der durch die andere Richtlinienregel belegt ist, und des größeren Werts zwischen dem MBR-Wert, der durch die zweite Richtlinienregel belegt ist, und dem MBR-Wert, der durch die erste Richtlinienregel belegt ist, ist.

5. Verfahren nach Anspruch 1, wobei
die ersten Ressourcenteilungsanzeigeinformationen in der zweiten Richtlinienregel enthalten sind oder in einem Installationsparameter der zweiten Richtlinienregel enthalten sind.

6. Verfahren nach Anspruch 1, wobei
wenn Dienste, die der ersten Richtlinienregel und der zweiten Richtlinienregel entsprechen, Sitzungsaufrufdienste sind, wobei die ersten Ressourcenteilungsanzeigeinformationen durch die PCRF gemäß dem zweiten Ressourcenteilungsanzeigeinformationen bestimmt werden, die durch eine Anwendungsfunktion, AF, bereitgestellt werden, wobei die zweiten Ressourcenteilungsanzeigeinformationen anzeigen, dass ein zweiter Sitzungsaufrufdienst, der der zweiten Richtlinienregel entspricht, eine Ressource mit einem ersten Sitzungsaufrufdienst teilt, der der ersten Richtlinienregel entspricht, wobei eine Medienart des ersten Sitzungsaufrufdienstes die gleiche wie die Medienart des zweiten Sitzungsaufrufdienstes ist.

7. Vorrichtung zum Verarbeiten von Richtlinienkontrolle, die auf eine Richtliniendurchsetzungsfunktion (206) angewendet wird, umfassend:
eine erste Empfangskomponente (92), die konfiguriert ist, um erste Ressourcenteilungsanzeigeinformationen zu empfangen, die durch eine Richtlinien- und Abrechnungsregelfunktion, PCRF, bereitgestellt werden, wobei erste Ressourcenteilungsanzeigeinformationen anzeigen, dass eine zweite Richtlinienregel eine Ressource mit einer ersten Richtlinienregel teilt; und
eine Durchsetzungskomponente (94), die konfiguriert ist, um einen Ressourcenteilungsvorgang für die zweite Richtlinienregel und die erste Richtlinienregel gemäß den ersten Ressourcenteilungsanzeigeinformationen durchzusetzen;
wenn die erste Richtlinienregel und die zweite Richtlinienregel Richtlinien- und Abrechnungskontrolle-Regeln, PCC-Regeln, sind, die Richtliniendurchsetzungsfunktion eine Richtlinien- und Abrechnungsdurchsetzungsfunktion, PCEF, ist; und wenn die erste Richtlinienregel und die zweite Richtlinienregel die Dienstgüte-Regeln, QoS-Regeln, sind, die Richtliniendurchsetzungsfunktion eine Trägerbindungs- und Ereignisberichtsfunktion, BBERF, ist;
wobei die ersten Ressourcenteilungsanzeigeinformationen ein Richtlinienregelname der ersten Richtlinienregel oder ein Bezeichner sind, der in der ersten Richtlinienregel enthalten ist; der Bezeichner, der in der ersten Richtlinienregel enthalten ist, bereitgestellt wird, wenn die erste Richtlinienregel anfänglich vorgesehen wird oder die erste Richtlinienregel modifiztiert wird;
**dadurch gekennzeichnet, dass** die Durchsetzungskomponente umfasst:
ein erstes Bestimmungselement (102), das konfiguriert ist, um zu bestimmen, dass die zweite Richtlinienregel und die erste Richtlinienregel an einen gleichen Träger gebunden sind; und
ein zweites Bestimmungselement (104), das konfiguriert ist, um zu bestimmen, dass ein garantierte-Bitrate-Wert, GBR-Wert, der durch die zweite Richtlinienregel und die erste Richtlinienregel belegt ist, ein größerer Wert zwischen einem GBR-Wert, der durch die zweite Richtlinienregel belegt ist, und einem GBR-Wert ist, der durch die erste Richtlinienregel belegt ist.

8. Vorrichtung nach Anspruch 7, wobei die Durchsetzungskomponente umfasst:
ein drittes Bestimmungselement, das konfiguriert ist, um, wenn der Träger nicht mit einer anderen Richtlinienregel neben der ersten Richtlinienregel und der zweiten Richtlinienregel verbunden ist, gemäß den ersten Ressourcenteilungsanzeigeinformationen zu bestimmen, dass ein GSBR-Wert des Trägers der größere Wert zwischen dem GBR-Wert, der durch die zweite Richtlinienregel belegt ist, und dem GBR-Wert ist, der durch die erste Richtlinienregel belegt ist;
und/oder
ein viertes Bestimmungselement, das konfiguriert ist, um, wenn der Träger ferner mit einer anderen Richtlinienregel neben der ersten Richtlinienregel und der zweiten Richtlinienregel verbunden ist, gemäß den ersten Ressourcenteilungsanzeigeinformationen zu bestimmen, dass der GBR-Wert des Trägers eine Summe eines GBR-Werts, der durch die andere Richtlinienregel belegt ist, und des größeren Werts zwischen dem GBR-Wert, der durch die zweite Richtlinienregel belegt ist, und dem GBR-Wert, der durch die erste Richtlinienregel belegt ist, ist.

9. Vorrichtung nach Anspruch 7, wobei die Durchsetzungskomponente umfasst:
ein fünftes Bestimmungselement, das konfiguriert ist, um zu bestimmen, dass die zweite Richtlinienregel und die erste Richtlinienregel an einen gleichen Träger gebunden sind; und
ein sechstes Bestimmungselement, das konfiguriert ist, um zu bestimmen, dass ein maximale-Bitrate-Wert, MBR-Wert, der durch die zweite Richtlinienregel belegt ist, und die erste Richtlinienregel ein größerer Wert eines MBR-Werts, der durch die zweite Richtlinienregel belegt ist, und eines MBR-Werts ist, der durch die erste Richtlinienregel belegt ist.

10. Vorrichtung nach Anspruch 9, wobei die Durchsetzungskomponente umfasst:
ein siebtes Bestimmungselement, das konfiguriert ist, um, wenn der Träger nicht mit einer anderen Richtlinienregel neben der ersten Richtlinienregel und der zweiten Richtlinienregel verbunden ist, gemäß den ersten Ressourcenteilungsanzeigeinformationen zu bestimmen, dass ein MBR-Wert des Trägers der größere Wert zwischen dem MBR-Wert, der durch die zweite Richtlinienregel belegt ist, und dem MBR-Wert ist, der durch die erste Richtlinienregel belegt ist;
und/oder
ein achtes Bestimmungselement, das konfiguriert ist, um, wenn der Träger ferner mit einer anderen Richtlinienregel neben der ersten Richtlinienregel und der zweiten Richtlinienregel verbunden ist, gemäß den ersten Ressourcenteilungsanzeigeinformationen zu bestimmen, dass der MBR-Wert des Trägers eine Summe eines MBR-Werts, der durch die andere Richtlinienregel belegt ist, und des größeren Werts zwischen dem MBR-Wert, der durch die zweite Richtlinienregel belegt ist, und dem MBR-Wert, der durch die erste Richtlinienregel belegt ist, ist.

## Revendications

1. Procédé permettant de traiter une commande de politique, comprenant :
la réception, par une fonction d'application de politique, d'une première information d'indication de partage de ressources fournie par une fonction de règles de politique et de facturation, PCRF, dans lequel la première information d'indication de partage de ressources indique qu'une seconde règle de politique partage une ressource avec une première règle de politique (S502) ; et
l'application, par la fonction d'application de politique, d'une opération de partage de ressources pour la seconde règle de politique et la première règle de politique selon la première information d'indication de partage de ressources (S504) ;
lorsque la première règle de politique et la seconde règle de politique sont des règles de commande de politique et de facturation, PCC, la fonction d'application de politique est une fonction d'application de politique et de facturation, PCEF ; et lorsque la première règle de politique et la seconde règle de politique sont des règles de qualité de service, QoS, la fonction d'application de politique est une fonction de liaison de support et de rapport d'événement, BBERF;
dans lequel la première information d'indication de partage de ressources est un nom de règle de politique de la première règle de politique ou un identifiant contenu dans la première règle de politique ; l'identifiant contenu dans la première règle de politique est fourni lorsque la première règle de politique est initialement provisionnée ou lorsque la première règle de politique est modifiée ;
dans lequel le procédé est **caractérisé en ce que** l'application, par la fonction d'application de politique, de l'opération de partage de ressources pour la seconde règle de politique et la première règle de politique selon la première information d'indication de partage de ressources, comprend :
la détermination, par la fonction d'application de politique, que la seconde règle de politique et la première règle de politique sont liées à un même support ; et la détermination, par la fonction d'application de politique, qu'une valeur de débit binaire garanti, GBR, occupée par la seconde règle de politique et la première règle de politique, est une valeur plus grande entre une valeur GBR occupée par la seconde règle de politique et une valeur GBR occupée par la première règle de politique.

2. Procédé selon la revendication 1, après la détermination, par la fonction d'application de politique, que la valeur GBR occupée par la seconde règle de politique et la première règle de politique est la valeur plus grande entre la valeur GBR occupée par la seconde règle de politique et la valeur GBR occupée par la première règle de politique, comprenant en outre :
lorsque le support n'est pas lié à une autre règle de politique que la première règle de politique et la seconde règle de politique, la détermination selon la première information d'indication de partage de ressources, par la fonction d'application de politique, qu'une valeur GBR du support est la valeur plus grande entre la valeur GBR occupée par la seconde règle de politique et la valeur GBR occupée par la première règle de politique ;
et/ou,
lorsque le support est en outre lié à une autre règle de politique en plus de la première règle de politique et de la seconde règle de politique, la détermination selon la première information d'indication de partage de ressources, par la fonction d'application de politique, que la valeur GBR du support est une somme d'une valeur GBR occupée par ladite autre règle de politique et de la valeur plus grande entre la valeur GBR occupée par la seconde règle de politique et la valeur GBR occupée par la première règle de politique.

3. Procédé selon la revendication 1, dans lequel l'application, par la fonction d'application de politique, de l'opération de partage de ressources pour la seconde règle de politique et la première règle de politique selon la première information d'indication de partage de ressources, comprend :
la détermination, par la fonction d'application de politique, que la seconde règle de politique et la première règle de politique sont liées à un même support ; et
la détermination, par la fonction d'application de politique, qu'une valeur de débit binaire maximal, MBR, occupée par la seconde règle de politique et la première règle de politique, est une valeur plus grande d'une valeur MBR occupée par la seconde règle de politique et d'une valeur MBR occupée par la première règle de politique.

4. Procédé selon la revendication 3, après la détermination, par la fonction d'application de politique, que la valeur MBR occupée par la seconde règle de politique et la première règle de politique est la valeur plus grande entre la valeur MBR occupée par la seconde règle de politique et la valeur MBR occupée par la première règle de politique, comprenant en outre :
lorsque le support n'est pas lié à une autre règle de politique que la première règle de politique et la seconde règle de politique, la détermination selon la première information d'indication de partage de ressources, par la fonction d'application de politique, qu'une valeur MBR du support est la valeur plus grande entre la valeur MBR occupée par la seconde règle de politique et la valeur MBR occupée par la première règle de politique ;
et/ou,
lorsque le support est en outre lié à une autre règle de politique en plus de la première règle de politique et de la seconde règle de politique, la détermination selon la première information d'indication de partage de ressources, par la fonction d'application de politique, que la valeur MBR du support est une somme d'une valeur MBR occupée par ladite autre règle de politique et de la valeur plus grande entre la valeur MBR occupée par la seconde règle de politique et la valeur MBR occupée par la première règle de politique.

5. Procédé selon la revendication 1, dans lequel
la première information d'indication de partage de ressources est contenue dans la seconde règle de politique ou contenue dans un paramètre d'installation de la seconde règle de politique.

6. Procédé selon la revendication 1, dans lequel
lorsque des services correspondant à la première règle de politique et à la seconde règle de politique sont des services d'appel de session, la première information d'indication de partage de ressources est déterminée par la PCRF selon la seconde information d'indication de partage de ressources fournie par une fonction d'application, AF, dans lequel la seconde information d'indication de partage de ressources indique qu'un second service d'appel de session correspondant à la seconde règle de politique partage une ressource avec un premier service d'appel de session correspondant à la première règle de politique, dans lequel un type de média du premier service d'appel de session est le même que le type de média du second service d'appel de session.

7. Dispositif permettant de traiter la commande de politique, appliquée à une fonction d'application de politique (206), comprenant :
un premier composant de réception (92), configuré pour recevoir une première information d'indication de partage de ressources fournie par une fonction de règles de politique et de facturation, PCRF, dans lequel la première information d'indication de partage de ressources indique qu'une seconde règle de politique partage une ressource avec une première règle de politique ; et
un composant d'application (94), configuré pour appliquer une opération de partage de ressources pour la seconde règle de politique et la première règle de politique selon la première information d'indication de partage de ressources ;
lorsque la première règle de politique et la seconde règle de politique sont des règles de commande de politique et de facturation, PCC, la fonction d'application de politique est une fonction d'application de politique et de facturation, PCEF ; et lorsque la première règle de politique et la seconde règle de politique sont des règles de qualité de service, QoS, la fonction d'application de politique est une fonction de liaison de support et de rapport d'événement, BBERF;
dans lequel la première information d'indication de partage de ressources est un nom de règle de politique de la première règle de politique ou un identifiant contenu dans la première règle de politique ; l'identifiant contenu dans la première règle de politique est fourni lorsque la première règle de politique est initialement provisionnée ou lorsque la première règle de politique est modifiée ;
dans lequel le dispositif est **caractérisé en ce que** le composant d'application comprend :
un premier élément de détermination (102), configuré pour déterminer que la seconde règle de politique et la première règle de politique sont liées à un même support ; et
un deuxième élément de détermination (104), configuré pour déterminer qu'une valeur de débit binaire garanti, GBR, occupée par la seconde règle de politique et la première règle de politique, est une valeur plus grande entre une valeur GBR occupée par la seconde règle de politique et une valeur GBR occupée par la première règle de politique.

8. Dispositif selon la revendication 7, dans lequel le composant d'application comprend :
un troisième élément de détermination, configuré pour, lorsque le support n'est pas lié à une autre règle de politique que la première règle de politique et la seconde règle de politique, déterminer selon la première information d'indication de partage de ressources qu'une valeur GBR du support est la valeur plus grande entre la valeur GBR occupée par la seconde règle de politique et la valeur GBR occupée par la première règle de politique ;
et/ou,
un quatrième élément de détermination, configuré pour, lorsque le support est en outre lié à une autre règle de politique en plus de la première règle de politique et de la seconde règle de politique, déterminer selon la première information d'indication de partage de ressources que la valeur GBR du support est une somme d'une valeur GBR occupée par ladite autre règle de politique et de la valeur plus grande entre la valeur GBR occupée par la seconde règle de politique et la valeur GBR occupée par la première règle de politique.

9. Dispositif selon la revendication 7, dans lequel le composant d'application comprend :
un cinquième élément de détermination, configuré pour déterminer que la seconde règle de politique et la première règle de politique sont liées à un même support ; et
un sixième élément de détermination, configuré pour déterminer qu'une valeur de débit binaire maximal, MBR, occupée par la seconde règle de politique et la première règle de politique, est une valeur plus grande d'une valeur MBR occupée par la seconde règle de politique et d'une valeur MBR occupée par la première règle de politique.

10. Dispositif selon la revendication 9, dans lequel le composant d'application comprend en outre :
un septième élément de détermination, configuré pour, lorsque le support n'est pas lié à une autre règle de politique que la première règle de politique et la seconde règle de politique, déterminer selon la première information d'indication de partage de ressources qu'une valeur MBR du support est la valeur plus grande entre la valeur MBR occupée par la seconde règle de politique et la valeur MBR occupée par la première règle de politique ;
et/ou,
un huitième élément de détermination, configuré pour, lorsque le support est en outre lié à une autre règle de politique en plus de la première règle de politique et de la seconde règle de politique, déterminer selon la première information d'indication de partage de ressources que la valeur MBR du support est une somme d'une valeur MBR occupée par ladite autre règle de politique et de la valeur plus grande entre la valeur MBR occupée par la seconde règle de politique et la valeur MBR occupée par la première règle de politique.
